# EUROPÄISCHE PATENTSCHRIFT

(11) **EP 2 223 177 B1**
(45) Veröffentlichungstag und Bekanntmachung des Hinweises auf die Patenterteilung: **15.04.2020**
(21) Anmeldenummer: 08862142.0
(22) Anmeldetag: 17.12.2008
(51) Int. Cl.: G01F 23/68, G01F 23/74, G01F 23/76, G01F 23/00

(54) **LEICHTFLÜSSIGKEITSABSCHEIDER MIT EINEM SCHWIMMERKÖRPER UND EINER VORRICHTUNG ZUR POSITIONSBESTIMMUNG DES SCHWIMMERKÖRPERS**
LOW DENSITY FLUID SEPARATOR WITH A FLOAT AND A DEVICE TO SENSE THE POSITION OF THE FLOAT
SÉPARATEUR DE FLUIDES LÉGERS COMPRENANT UN FLOTTEUR ET UN DISPOSITIF DE MESURE DE LA POSITION DU FLOTTEUR

(30) Priorität: 17.12.2007 DE 102007061187
(43) Veröffentlichungstag der Anmeldung: 01.09.2010
(73) Patentinhaber: Opanski, Josef Zoltan, 88339 Bad Waldsee (DE)
(72) Erfinder: Opanski, Josef Zoltan, 88339 Bad Waldsee (DE)
(74) Vertreter: Otten, Roth, Dobler & Partner mbB Patentanwälte
(86) Internationale Anmeldenummer: PCT/EP2008/010737
(87) Internationale Veröffentlichungsnummer: WO 2009/077167

(56) Entgegenhaltungen:
- WO-A1-98/12514
- DE-A1- 3 115 829
- DE-A1- 4 232 346
- DE-U- 7 442 400
- DE-U1- 20 002 931
- DE-U1- 29 711 083
- GB-A- 1 555 510
- US-A- 5 767 775

## Beschreibung

### Stand der Technik

Die Erfindung betrifft Anordnungen mit einem sich ändernden Flüssigkeitsniveau in einem Behälter, wobei in der Flüssigkeit ein Schwimmerkörper vorhanden ist, der zumindest in vertikaler Richtung seine Position verändern kann. Die Position des Schwimmerkörpers kann insbesondere von der Art und/oder Menge der Flüssigkeit im Behälter abhängen, womit über die Schwimmerposition bzw. deren Veränderung Informationen über Zustände im Inneren des Behälters ableitbar sind. Anwendungen betreffen kontinuierliche oder diskontinuierlich Vorgänge. Entsprechende Anordnungen umfassen zum Beispiel Vorratstanks bzw. zum Beispiel verfahrentechnische Vorrichtung. Als komplexere Anwendungen sind beispielsweise Abscheideeinrichtung bzw. Trennverfahren für Flüssigkeiten mit unterschiedlicher Dichte zu nennen. Bei Abscheidern kann der Schwimmerkörper zudem Zusatzfunktionen übernehmen, insbesondere für einen selbsttätigen Verschluss eines Flüssigkeitsablaufes des Behälters.

Bei Abscheidern von z.B. wassergefährdenden Stoffen aus einem Flüssigkeitsgemisch bzw. bei Leichtflüssigkeitsabscheidern ist es außerdem notwendig, unter Beachtung von Explosionsschutzmaßnahmen eine Leichtflüssigkeitsschicht zu messen, was bisher relativ aufwändig ist bzw. nur unbefriedigend funktioniert. Sonden benötigen in der Regel permanent Strom bzw. können leicht verschmutzen oder beschädigt werden, was Fehlfunktionen mit sich bringt.

Außerdem können insbesondere bei Abscheidern kritische Situationen auftreten, beispielsweise ein Rückstau im Abscheider, durch Verstopfung des Ablaufs, eines Ablaufkanals oder auch durch das Schließen des selbsttätigen Abschlusses.

Die DE 74 42 400 U betrifft einen Abscheider für Leichtflüssigkeiten mit einer Durchflussöffnung, die mit einem Schwimmerventil verschließbar ist.

### Aufgabe und Vorteile der Erfindung

Aufgabe der Erfindung ist es, den Betrieb von Anordnungen, welche einen Abscheidebehälter zur Aufnahme von Flüssigkeiten und zur Abscheidung eines Flüssigkeitsanteils aufweisen, wobei ein in der Flüssigkeit schwimmfähiger Schwimmerkörper vorhanden ist, im Hinblick auf technische und wirtschaftliche Anforderungen zu verbessern. Insbesondere soll eine dauerhafte Funktionssicherheit auch an problematischen bzw. im Regelbetrieb nur bedingt zugänglichen Aufstellorten des Abscheidebehälters gewährleistet werden.

Diese Aufgabe wird durch den unabhängigen Anspruch 1 gelöst. In den abhängigen Ansprüchen sind vorteilhafte Weiterbildungen der Erfindung aufgezeigt.

Die Erfindung geht zunächst aus von einem Leichtflüssigkeitsabscheider zur Aufnahme einer Flüssigkeit, die mehrere Flüssigkeitsanteile mit jeweils unterschiedlicher Dichte umfassen kann, mit einem Behälter mit einem Zulauf und einem Ablauf für die Flüssigkeit sowie einem in der Flüssigkeit schwimmfähigen Schwimmerkörper, dessen Position in dem Behälter von der Art und/oder der Menge der Flüssigkeit in dem Behälter abhängt, wobei der Schwimmerkörper derart ausgebildet ist, oben in einem ersten Flüssigkeitsanteil mit einer ersten Flüssigkeitsanteil-Dichte zu schwimmen, wobei sich ein weiterer Flüssigkeitsanteil der Flüssigkeit mit einer geringeren Flüssigkeitsanteil-Dichte als die erste Flüssigkeitsanteil-Dichte oberhalb des ersten Flüssigkeitsanteils aufschwimmen kann, und wobei der Schwimmerkörper für einen selbsttätigen Verschluss des Ablaufs ausgebildet ist. Der selbsttätige Verschluss bezieht sich auf ein Verschließen von innen bei Erreichen einer maximalen Aufnahmekapazität der Vorrichtung für den Flüssigkeitsanteil mit geringerer Flüssigkeitsanteil-Dichte. Insbesondere ist eine Ablaufkontrolleinrichtung zur Kontrolle des Ablaufs vorgesehen, die abhängig von der Position des Schwimmerkörpers im Behälter den Ablauf verschließen bzw. öffnen kann. Der Schwimmerkörper kann z.B. einen schwimmfähigen Körper aufweisen, der im Wesentlichen für einen Auftrieb des Schwimmerkörpers in der Flüssigkeit bewirkt, an dem starr bzw. fest fixiert ein Verschlussteil angeordnet ist, das mit einem Gegenabschnitt am Ablauf in einem Ablaufverschlusszustand so zusammenwirken kann, dass der Ablauf von Flüssigkeit im Behälter für einen Durchlass vom Behälter über den Ablauf der Flüssigkeit nach außen dicht verschlossen ist. Dies gilt zum Beispiel für Zustände, bei welchen ein hydraulischer Druck ablaufseitig am Ablauf geringer ist, als ein hydraulischer Druck, der behälterseitig am Ablauf ansteht, also insbesondere keine Rückstausituation herrscht.

Insbesondere ist der Leichtflüssigkeitsabscheider für eine Abscheidung einer Flüssigkeit ausgebildet, die eine geringere Dichte als Wasser oder eine andere wässrige Phase hat, aus einem Gemisch von unterschiedlichen Flüssigkeitsanteilen bzw. Flüssigphasen. Bevorzugt sind Abscheidemittel zur Abscheidung eines Flüssigkeitsanteils in der Flüssigkeit, der eine geringere Dichte als andere Anteile in der Flüssigkeit aufweist, vorhanden, wobei der Schwimmerkörper für den selbsttätigen Verschluss des Ablaufs ausgebildet ist.
Ein erster wesentlicher Aspekt der Erfindung liegt darin, dass eine Erfassungseinrichtung vorhanden ist, welche eine Position des Schwimmerkörpers im Behälter erfasst und eine Information bereitstellt, zumindest wenn der Schwimmerkörper die Position erreicht. Mit Hilfe der Erfassungseinrichtung und der wenigstens einen erfassbaren Position des Schwimmerkörpers im Behälter können grundlegende bzw. aufschlussreiche Informationen über den inneren Zustand des Behälters erhalten werden. Dabei wird davon ausgegangen, dass eine Flüssigkeit im Behälter vorhanden ist, in welcher der Schwimmerkörper frei in der Flüssigkeit austariert schwimmen kann. Auf diese Weise können auf Grundlage der erhaltenen Informationen unkritische aber auch insbesondere kritische Zustände im Betrieb des Behälters sofort erkannt und gemeldet bzw. ggf. ein Alarm erzeugt und/oder Maßnahmen eingeleitet werden. Dies ist insbesondere für Leichtflüssigkeitsabscheider vorteilhaft.

Die Vorrichtung zur Abscheidung von Flüssigkeitsanteilen weist insbesondere einen Behälter mit einer Beruhigungszone bzw. einer Strömungsberuhigung auf, welche die Ausbildung einer Trennschicht zwischen den dichteverschiedenen Flüssigkeiten ermöglicht. Dem Flüssigkeitsabscheider ist häufig eine Einrichtung zur Abscheidung von in der Flüssigkeit vorhandenen Schwebstoffe oder mitgeführten Feststoffen vorgeschaltet oder darin integriert.

Ein weiterer Aspekt der Erfindung liegt darin, dass eine Rückstausicherung mit einem selbsttätig wirkenden Verschluss bei einer auf den Behälter ablaufseitig wirkenden Rückstausituation vorhanden ist. Damit kann ein unerwünschter Zulauf in den Behälter entgegen der im Regelbetrieb bzw. des sicheren Abscheidebetriebs herrschenden Zulauf- bzw. Durchströmrichtung verhindert werden. Ein Flüssigkeitsstrom von in dem Behälter vorhandener Flüssigkeit über den Zulauf kann dadurch sicher verhindert werden.

Insbesondere ist es von Vorteil, dass die Vorrichtung zur Abscheidung eines Flüssigkeitsanteils in der Flüssigkeit, der eine geringere Dichte als andere Flüssigkeitsanteile in der Flüssigkeit aufweist, ausgebildet ist. Dies betrifft beispielsweise Schwerkraftabscheider, insbesondere Leichtflüssigkeitsabscheider.

Der Schwimmerkörper ist dabei bevorzugt im Hinblick auf seine Massendichte bzw. sein Auftriebverhalten so austariert, dass er für eine Flüssigkeit mit einer Dichte von ca. 1000 kg*m⁻³ oben in bzw. auf dieser schwimmt, also eine geringere Dichte als Wasser besitzt, aber eine größere Dichte als die abzutrennende Leichtflüssigkeit wie z.B. entsprechende flüssige Kohlenwasserstoffe, insbesondere Benzin, Diesel, Heizöl und dergleichen.

Der Schwimmerkörper kann gegenüber dem Flüssigkeitsanteil, in welchem er schwimmt, zum Beispiel mit einem Teil etwas über einen Flüssigkeitsspiegel des Flüssigkeitsanteils überstehen, mit diesem bündig oben abschließen oder von dem Flüssigkeitsanteil geringfügig überdeckt sein. Vorteilhaft ist der Schwimmerkörper so ausgestaltet, dass die mit der erfassten Position des Schwimmerkörpers erhaltene Information Rückschlüsse für eine exakte Bestimmung des Niveaus des Flüssigkeitsanteils liefert, in welchem der Schwimmerkörper schwimmt, bzw. des unteren Niveaus des Leichtflüssigkeitsanteils und damit der Leichtflüssigkeitsmenge im Behälter. Insbesondere wird mit der Erfassungseinrichtung immer eine aktuelle Schwimmerposition eindeutig erfassbar. Die daraus gebildete Information kann in einer übergeordneten Einheit, z.B. in einer Rechner- bzw. Computereinheit aufgenommen, gespeichert bzw. weiterverarbeitet werden.

Insbesondere können drei vorgebbare und unterschiedliche Positionen des Schwimmerkörpers in der Flüssigkeit relativ zum Behälter bestimmt und unterschieden werden. Mit drei erfassbaren Positionen des Schwimmerkörpers, die intelligent vorgebbar sind, lassen sich nahezu alle zum sicheren Betrieb des Abscheiders relevanten Zustände eindeutig zuordnen bzw. überwachen.

Die relevanten Zustände betreffen insbesondere kritische Situation bei dem Betrieb des Abscheiders, wie beispielsweise eine erreichte bzw. vorgebbare maximale Flüssigkeitsschichtstärke der Leichtflüssigkeit, ein Zulauf von Flüssigkeit über den Ablauf in den Behälter, eine Ablaufverstopfung, ein Schwimmerkörperdefekt und/oder hydraulische Überlastung in dem Behälter bzw. der Abscheideranlage.

Weiter wird vorgeschlagen, dass Übertragungsmittel vorhanden sind, um die bereitgestellten Informationen aus dem Inneren des Behälters nach außen zu übertragen. Außen kann hierzu eine Empfangseinheit z.B. in der Nahumgebung des Behälters vorhanden sein.

Bevorzugt umfassen die Übertragungsmittel eine Verbindungsleitung zum Beispiel ein Kabel zur Übertragung der bereitgestellten Informationen.

Damit kann insbesondere eine explosionsgeschützte Ausführung der Vorrichtung bzw. des Behälters im Inneren bereitgestellt werden. Dies kann für Leichtflüssigkeitsabscheider wesentliche Voraussetzung für eine gesetzeskonforme Genehmigung sein, um entsprechende Sicherheitsauflagen zu erfüllen. Zum Beispiel auch um höchste Explosionsschutzanforderungen zu erfüllen, in sogenannter "EX 0" Zone.

Außerdem ist es vorteilhaft, dass die Rückstausicherung einen selbsttätigen Schwimmerverschluss auf einer Ablaufseite des Ablaufs umfasst. Der selbsttätige Schwimmerverschluss schwimmt in einem Flüssigkeitsvolumen, das auf einer Seite einer Ablauföffnung des Ablaufs vorhanden ist, die auf der dem Behälterinneren gegenüberliegenden Seite liegt. Ohne den selbsttätigen Schwimmerverschluss würde dieses Flüssigkeitsvolumen in einer Rückstausituation durch die Ablauföffnung in den Behälter drängen, was keinesfalls eintreten darf, um einen sicheren Betrieb des Leichtflüssigkeitsabscheiders zu garantieren.

Bevorzugt verfügt der selbsttätige Schwimmerverschluss über Magnetmittel, die ein Magnetfeld ausbilden, um einen geschlossenen Zustand des Ablaufs durch den selbsttätigen Schwimmerverschluss zu erfassen. Damit kann eine fehlerfreie Bestimmung der Position des Schwimmerkörpers erfolgen, ohne ein Verfälschung durch Strömungseinflüsse, die auf den Behälter durchströmende Flüssigkeit beruhen.

Vorteilhafterweise umfasst die Rückstausicherung ein Verschlusselement auf der Ablaufseite des Ablaufs, wobei das Verschlusselement mit einem Schwimmer auf einer Behälterseite des Ablaufs gekoppelt ist. Damit kann ein Verschließen des Ablaufs abhängig von beidseitig der Ablauföffnung herrschenden Verhältnissen kontrolliert bzw. vorgenommen oder aufgehoben werden. Dies kann insbesondere beeinflusst sein von einer über der Ablauföffnung anstehenden Flüssigkeitshöhe im Behälter oder in der am Ablauf ablaufseitig anstehenden Flüssigkeitshöhe, einem hydraulischen Druck und/oder einem Strömungszustand der Flüssigkeit auf der Ablaufseite und/oder der Behälterseite des Ablaufs.

Erfindungsgemäß umfasst die Erfassungseinrichtung Magnetmittel, die ein Magnetfeld ausbilden, mit dem die vorgebbare Position des Schwimmerkörpers erfassbar ist. Die Magnetmittel, welche in der Regel voneinander getrennte Einheiten umfassen, können so angeordnet und aufeinander abgestimmt positioniert werden, dass an mehreren vorgebbaren unterschiedlichen Stellen im Behälter eine Schwimmerkörperposition erfassbar ist. Damit ist flexibel für unterschiedlichste Anwendungsfälle eine Bestimmung der Schwimmerkörperposition zuverlässig möglich. Die erfindungsgemäße Vorrichtung kann ohne Probleme nachträglich an vorhandenen Behältern mit Schwimmerkörpern nachgerüstet werden. Der Platzbedarf für die Magnetmittel und die Sendeeinheit ist relativ gering. Außerdem können standardmäßig erhältliche Bauteile dafür verwendet werden. Außerdem sind Magnetmittel robust und unempfindlich einsetzbar.

Vorteilhafterweise umfassen die Magnetmittel einen am Schwimmerkörper vorhandenen Permanentmagneten und mehrere zum Schwimmerkörper separate positionsfeste schaltbare Magnetelemente, wobei der Permanentmagnet abhängig von der Position des Schwimmerkörpers jeweils genau einen der schaltbaren Magnetelemente schalten kann. Insbesondere bei Anlagen, z.B. Leichtflüssigkeitsabscheider, bei denen mehrere Positionen des Schwimmerkörpers erfasst werden sollen, ist dies vorteilhaft.

Des Weiteren wird vorgeschlagen, dass Kontrollmittel vorgesehen sind, mit denen eine vor Ort Kontrolle der Vorrichtung zur Aufnahme einer Flüssigkeit registriert und in einer zentralen Einheit verarbeitet wird, insbesondere um eine Eigenkontrolle der Anlage zu garantieren. So können insbesondere gesetzliche Auflagen erfüllt und nachvollziehbar protokolliert werden. Wird vor Ort z.B. ein Abscheider von einer Person kontrolliert, was in regelmäßigen Abständen zum Beispiel monatlich vorgeschrieben ist, kann dies insbesondere durch eine Kontrolle der Funktion des Schwimmerkörpers erfolgen. In der Regel wird dabei auch der gesamte Abscheider überprüft bzw. gereinigt und/oder ggf. repariert. Die vor Ort Kontrolle wird von den Kontrollmitteln, die z.B. eine entsprechende Software umfasst, erkannt, wenn innerhalb kurzer Zeit, z.B. innerhalb einer Minute, der Schwimmerkörper so manuell bewegt wird, dass sämtliche mögliche Schaltkontakte insbesondere der Magnetelemente bzw. Reed-Schalter geschaltet werden bzw. wieder in den nicht geschalteten Zustand gelangen, was im Betrieb nicht vorkommen kann. Dabei wird dieser Vorgang über die Sendeeinheit an die Empfangseinheit gesendet und dort das Signal empfangen und weiterverarbeitet bzw. in einem Prüfprotokoll hinterlegt. Wird beispielsweise nicht innerhalb einer vorgebbaren Zeitspanne, z.B. 40 Tage ab der letzten Funktionsprüfung vor Ort, die oben beschriebene Signalabfolge bzw. der Vorgang "Funktionsprüfung" im Empfangsgerät bzw. einer Datenzentrale registriert bzw. angezeigt, wird ein Alarm, beispielsweise in Form von "Eigenkontrolle fehlt" ausgegeben. Insgesamt kann somit gewährleistet werden, dass sowohl die Abscheideranlage als auch die Warnanlage regelmäßig geprüft wird.

Vorteilhafterweise kann beispielsweise in einem regelmäßigen Zeitzyklus, beispielsweise monatlich, bei der Reinigung eines Schwimmerkörpers bzw. des selbsttätigen Abschlusses auch die Sendeeinheit bzw. die Überwachungseinheit gereinigt und kontrolliert werden.

Im Zusammenhang mit der Erfindung ist eine Vorrichtung zur Positionsbestimmung eines Schwimmerkörpers in einem Behälter diskutiert, zur Aufnahme einer Flüssigkeit, in welcher der Schwimmerkörper schwimmfähig ist, wobei der Behälter Teil eines Leichtflüssigkeitsabscheiders ist und wobei die Position des Schwimmerkörpers in dem mit der Flüssigkeit beaufschlagten Behälter von der Art und/oder der Menge der Flüssigkeit im Behälter abhängt, mit einer Erfassungseinrichtung zur Erfassung einer vorgebbaren Position des Schwimmerkörpers im Behälter. Davon ausgehend ist eine Sendeeinheit vorhanden, die mit den Erfassungsmitteln gekoppelt ist, um in der vorgebbaren Position des Schwimmerkörpers in dem Behälter ein Signal zur Positionsbestimmung des Schwimmerkörpers zu erzeugen, das kabellos oder über eine Leitungsverbindung an eine Empfangseinheit übertragbar ist.

Insbesondere können mehrere unterschiedliche Positionen des Schwimmerkörpers vorgegeben werden, bei deren Erreichen mittels der Sendeeinheit ein Signal kabellos übertragbar ist. Demgemäß lassen sich verschiedene Vorteile erzielen. Eine kabellose Übermittlung eines Signals z.B. an eine Empfangseinheit, ermöglicht es, Informationen von Orten, die räumlich schwierig gelegen sind bzw. deren Anbindungsmöglichkeiten und Erreichbarkeit von außen nicht oder nur sehr schwierig ist, auch über wesentliche Entfernungen zu erhalten. Insbesondere müssen keine aufwändigen bzw. teuren Maßnahmen zur Verbindung des Behälters bzw. Abscheiders über Leitungen und dergleichen vorgenommen werden, um die Schwimmerkörperüberwachung zu realisieren. Die Einheit zum Empfang, der Verarbeitung bzw. Abspeicherung des Signals kann hingegen nahezu ohne Einschränkungen an geeigneter Stelle positioniert werden, wo insbesondere die Stromversorgung vorteilhaft ist bzw. eine Anzeige bzw. Meldung bezüglich der über die Signale erhaltenen Informationen ermöglicht.

Vorteilhafterweise ist die Sendeeinheit mit den schaltbaren Magnetelementen verbunden, dies kann beispielsweise über Leitungen oder über eine Sendeeinheit geschehen, wobei die Sendeeinheit insbesondere positionsfest und nahe bei oder an dem Behälter positioniert ist.

Weiter ist es vorteilhaft, dass die Sendeeinheit positionsfest und mit den schaltbaren Magnetelemente verbunden ist. Damit kann insbesondere die Sendeeinheit bzw. ein in der Sendeeinheit vorhandener Modulator samt Stromversorgung, beispielsweise über Batterie oder Solarladegerät mit Akku außerhalb des Behälters bzw. des Abscheiders positioniert werden. Dies kann z.B. aus Gründen einer schlechten Zugänglichkeit an das Innere des Behälters vorteilhaft sein, z.B. wenn der Behälter sich im Erdreich befindet und nachgerüstet werden soll. Die schaltbaren Magnetelemente bzw. die Reed-Schalter Beispielsweise können an einer Schwimmerkörperführung oder einer Behälterwand im Behälter angeordnet werden. Die Sendeeinheit bzw. der Modulator können auch besser kontrolliert bzw. gewartet oder repariert werden. Außerdem ist auch die Stromversorgung der Sendeeinheit einfacher einrichtbar.

Ebenso wird vorgeschlagen, dass die Sendeeinheit den Übertragungsmitteln zugeordnet ist, wobei die Sendeeinheit mit der Erfassungseinrichtung gekoppelt ist, um in der zumindest einen vorgebbaren Position des Schwimmerkörpers in dem Behälter ein Signal zur Positionsbestimmung des Schwimmerkörpers zu erzeugen und an eine Empfangseinheit zu übertragen. Die Sendeeinheit kann kabellos bzw. mit Funkübertragung oder über eine Leitung mit der Erfassungseinrichtung gekoppelt sein.

Weiter wird vorgeschlagen, dass die Magnetmittel zumindest ein am Schwimmerkörper vorhandenes schaltbares Magnetelement und mehrere zum Schwimmerkörper separate positionsfeste Permanentmagnete umfassen, die so aufeinander abgestimmt sind, abhängig von der Position des Schwimmerkörpers im Behälter einen elektrischen Kontakt durch Schalten des Magnetelements zu schließen oder zu unterbrechen. Insbesondere ist das schaltbare Magnetelement kommunizierend bzw. leitend verbunden mit der Sendeeinheit. Das schaltbare Magnetelement lässt sich insbesondere im Schwimmerkörper geschützt unterbringen. Lediglich die Permanentmagnete, die vergleichsweise robust und unempfindlich sind, werden außerhalb des Schwimmerkörpers positionsfest eingerichtet. Die Permanentmagnete können in dem Behälter in Kontakt mit der Flüssigkeit kommen oder können mit einer Ummantelung versehen werden, welche das von den Permanentmagneten ausgebildete Magnetfeld nicht wesentlich stört. Im Zusammenspiel der Permanentmagnete bzw. deren Magnetfeld mit dem zumindest einen schaltbaren Magnetelement, z.B. ein Reed-Schalter bzw. ein Reed-Kontakt, an der Anbringstelle des Permanentmagneten, wird eine punktuelle Erfassung der Position des Schwimmerkörpers im Behälter möglich. Denn mit einem Permanentmagnet und einem schaltbaren Magnetelement können definierte Schaltzustände erreicht werden, so dass nur innerhalb eines eng begrenzten Aufenthaltsbereichs des Schwimmerkörpers es zu einem Schalten des schaltbaren Magnetelements aufgrund des Permanentmagneten am Schwimmerkörper kommt. So kann die Schwimmerkörperposition insbesondere millimetergenau bzw. zentimetergenau erfolgen.

Weiter wird vorgeschlagen, dass die Sendeeinheit ausgebildet ist, das Signal zur Positionsbestimmung des Schwimmerkörpers bei geschlossenem elektrischem Kontakt zu erzeugen. Damit kann mit dem schaltbaren Magnetelement das Signal zur Bestimmung der Position des Schwimmerkörpers bei einem geschlossenen elektrischen Kontakt erfolgen. Damit wird insbesondere ein Stromkreis nur dann geschlossen, wenn z.B. eine interessierende Position des Schwimmerkörpers bzw. damit insbesondere eine kritische Betriebssituation im Behälter vorherrscht. Damit kann die Überwachung des Schwimmerkörpers bzw. des Behälters mit nur vergleichsweise sehr geringen Stromverbräuchen auskommen. Der elektrische Strom fließt insbesondere nur in wenigen aller möglichen Positionen des Schwimmerkörpers und auch dann nur für eine relativ kurze Zeit. In der Regel ist es ausreichend, beispielsweise lediglich für ein paar Sekunden, um ein Signal zu erzeugen und zu senden. Danach kann automatisch eine Abschaltung erfolgen, z.B. indem bei geschlossenem elektrischen Kontakt über die Magnetmittel, eine Stromunterbrechung des betroffenen Stromkreises an anderer Stelle vorgenommen wird. Die Sendeeinheit kann hierfür z.B. eine entsprechende Schaltfunktion bzw. Recheneinheit aufweisen, wobei die Recheneinheit auch andere Funktionen übernehmen kann. Die Sendeeinheit wird weiter unten näher erläutert, ist aber grundsätzlich ausgebildet ein gewünschtes Signal zu erzeugen und zu senden, z.B. ein Radiosignal.

Nach einem erzeugten und gesendeten Signal kann bis zu einem nächsten Signal Zeit verstreichen, die beispielsweise vom Hersteller voreingestellt ist, bis ein erneutes Signal, abgegeben wird. Dies kann sich so oft wiederholen, bis z.B. eine Quittierung einer mit dem Signal erzeugten Meldung erfolgt, z.B. an einer mit der Empfangseinheit verbundenen Einheit, und/oder die Position des Schwimmerkörpers die erreichte Position verlassen hat und/oder eine kritische Situation im Behälter vor Ort behoben bzw. dort eine Quittierung erfolgt ist.

Das vom Empfangsgerät empfangene Signal kann insbesondere verarbeitet werden, um ein Warnsignals bzw. eine Warnmeldung auszulösen. Dies kann beispielsweise optisch, akustisch oder auch kombiniert erfolgen. Beispielsweise kann hierfür ein Warnlämpchen oder eine Warnhupe vorgesehen werden.

Die nahe am bzw. im Behälter vorhandene Sendeeinheit kommt durch die nur seltene bzw. kurzzeitige Signalerzeugung und - sendung mit nur sehr kleinen Strommengen aus. Dies ermöglicht vorteilhafterweise eine Stromversorgung der Sendeeinheit bzw. des schaltbaren elektrischen Kontakts über einen Batterie-und/oder Solarbetrieb mit Ladeakku.

Die vom Behälter entfernt positionierte die Empfangseinheit kann im Normalbetrieb ebenfalls mit einer vergleichsweise sehr geringen Strommenge betrieben werden. Nur bei Situationen, die über die erfasste Position des Schwimmerkörpers erkannt wird bzw. wenn ein Signal empfangen wird der Hauptstromkreis aktiviert und es fließt ein Strom für die Signalbearbeitung, -erfassung bzw. z.B. für einen Alarmsignalgeber. Ansonsten ist ein nur sehr geringer "Stand-by" Stromverbrauch vorhanden.

Weiter ist es besonders vorteilhaft, dass an dem Schwimmerkörper die Sendeeinheit vorhanden ist, welche mit dem zumindest einen schaltbaren Magnetelement verbunden ist. Damit kann geschützt im Schwimmerkörper, insbesondere dicht gegenüber der den Schwimmerkörper teilweise umgehenden Flüssigkeit, die Sendeeinheit und das schaltbare Magnetelement samt Leitungen untergebracht werden. Da in der Regel ein Schwimmerkörper leicht als separate Baueinheit austauschbar ist, kann die Sendeeinheit bzw. zumindest ein schaltbares Magnetelement im Schwimmerkörper ohne Weiteres nachgerüstet werden bzw. auch die im Behälter vorhandenen Permanentmagnete.

Bevorzugt sind zumindest zwei Magnetelemente vorgesehen, wobei ein Signal durch die Sendeeinheit erzeugbar ist, wenn genau zwei schaltbare Magnetelemente gleichzeitig geschalten sind. Dies erhöht die Funktionssicherheit, wenn mehr als eine vorgegebene Position des Schwimmerkörpers sicher erfasst werden soll, insbesondere wenn die zu erfassenden Positionen vergleichsweise dicht beieinander liegen.

Vorteilhafterweise können drei voneinander beabstandete schaltbare Magnetelemente in einem Schwimmerkörper vorgesehen sein. Häufig sind für einen sicheren Betrieb drei zu unterscheidende Schwimmerkörperpositionen ausreichend. Dabei kann eine logische Unterscheidung der unterschiedlichen Positionen des Schwimmerkörpers erfolgen, indem eine Erkennung bzw. Erfassung einer Position bei genau zwei gleichzeitig geschalteten Magnetelemente stattfindet, denn es lassen sich mit drei Magnetelementen drei unterschiedliche Kombination mit jeweils zwei geschalteten Magnetelementen realisieren. Wird eine interessierende Position des Schwimmerkörpers im Behälter erreicht, kommen zwei der Magnetelemente, z.B. ein erstes und ein zweites, jeweils so nahe jeweils an entsprechende zugeordnete Permanentmagnete, dass unter der Wirkung des Magnetfelds des einen Permanentmagneten das erste Magnetelement geschalten wird und gleichzeitig unter der Wirkung des Magnetfelds des anderen Permanentmagneten das zweite Magnetelement geschalten wird. Dieser Zustand mit zwei gleichzeitig geschlossenen elektrischen Kontakten führt dazu, dass die Sendeeinheit ein Signal erzeugt und absetzt. In einer anderen interessierende Position des Schwimmerkörpers im Behälter können insbesondere zwei andere Magnetelemente gleichzeitig geschalten sein. Grundsätzlich können aber auch die beiden gleichen Magnetelemente in dieser Position des Schwimmerkörpers geschaltet sein. Nach Verlassen einer erfassten Position des Schwimmerkörpers entfernen sich die geschalteten Magnetelemente von den Permanentmagneten bzw. deren Magnetfeld, so dass die Magnetelemente wieder in den nicht geschalteten Zustand übergehen und für die Erfassung einer nächsten Position des Schwimmerkörpers bereit sind. Beim Übergang in den nicht geschalteten Zustand, werden in der Regel die beiden Magnetelemente nicht beide gleichzeitig umgeschaltet, sonder es kann bei der Bewegung des Schwimmerkörpers insbesondere kurzzeitig nur eines der Magnetelemente geschalten sein. Somit ist es vorteilhaft, wenn insbesondere die Schaltung nur eines Magnetelements zu keiner Signalerzeugung durch die Sendeeinheit führt.

Insbesondere kann eine Schaltzentrale des Abscheiders ständig kontrolliert bzw. beobachtet werden. Bei Neuanlagen kann ein vergleichsweise großes wirtschaftliches Einsparpotenzial realisiert werden. Insbesondere kann ein Hersteller bereits ab Werk kritische Schwimmerkörperpositionen durch Positionierung der entsprechenden Sensoren bzw. Magnetmittel bestimmen. Die schnurlose Verbindung zwischen Sendeeinheit und einem Auswerte- bzw. Empfangsgerät ist insbesondere dort vorteilhaft, wo es keine Möglichkeit gibt, Kabel zu verlegen oder der Abscheider zu weit von einer Stromquelle entfernt liegt. Eine Stromersparnis ergibt insbesondere auch ein Stand-By-Modus.

### Figurenbeschreibung

Weitere Merkmale und Vorteile der Erfindung werden anhand der in den Figuren stark schematisch dargestellten Ausführungsbeispiele näher erläutert. Im Einzelnen zeigt:
- Figur 1: einen Flüssigkeitsabscheider mit einem dazu beabstandet positionierten Gebäude,
- Figur 2: eine zur Figur 1 alternative Anordnung eines Flüssigkeitsabscheiders mit einem Gebäude,
- Figur 3 bis Figur 5: unterschiedliche Betriebszustände der in Figur 1 gezeigten Anordnung,
- Figur 6 bis Figur 10: eine alternative Anordnung eines Flüssigkeitsabscheiders mit Gebäude jeweils in unterschiedlichen Betriebszuständen,
- Figur 11: eine schematische Darstellung eines Fühler- und Senderteils gemäß der Erfindung,
- Figur 12: ein ebenfalls schematisch dargestelltes erfindungsgemäßes Empfängerteil mit Warnsignalgeber,
- Figur 13: ein weiterer nicht erfindungsgemäßer Flüssigkeitsabscheider mit Differenzdruckmessung und Warnanlage schematisiert gezeigt und
- Figur 14: einen Ausschnitt aus einem erfindungsgemäßen Leichtflüssigkeitsabscheider mit einem Ablauf im Bereich eines bekannten selbsttätigen Verschlusses für den Ablauf,
- Figur 15: die Anordnung gemäß Figur 14 in einer Rückstausituation,
- Figur 16 bis Figur 19: eine gegenüber der Anordnung gemäß Figur 14 und 15 erfindungsgemäß weiterentwickelte Anordnung mit einer Rückstausicherung in unterschiedlichen Betriebszuständen,
- Figur 20: eine zu der Rückstausicherung gemäß der Figuren 16 bis 19 alternative erfindungsgemäße Rückstausicherung,
- Figur 21 bis Figur 23: eine weitere alternative erfindungsgemäße Rückstausicherung für einen Leichtflüssigkeitsabscheider,
- Figur 24: ein Detail der Rückstausicherung gemäß Figur 23,
- Figur 25 und Figur 26: eine stark schematisierte Gesamtansicht im Schnitt durch einen erfindungsgemäßen Leichtflüssigkeitsabscheider in zwei unterschiedlichen Betriebszuständen.

In den Figuren sind für unterschiedliche Ausführungsbeispiele der Erfindung für entsprechende Bauteile teilweise die gleichen Bezugszeichen verwendet. Dabei werden in den Figuren Situationen mit flüssigkeitsgefüllten Behältern bzw. Abscheidern dargestellt.

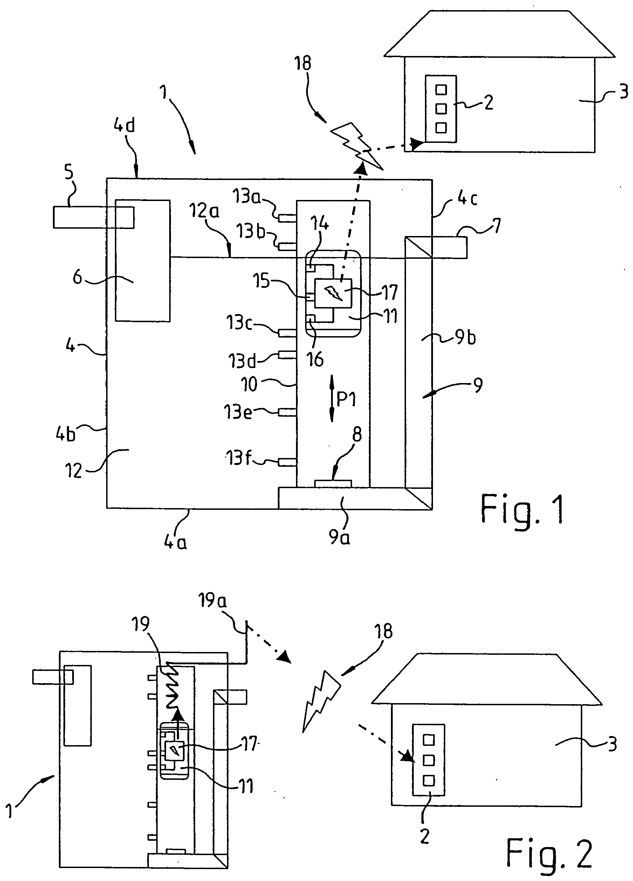

Zunächst wird anhand Figur 1 ein erfindungsgemäßer Abscheider 1 mit seinen Bauelementen erläutert und in seiner Grundfunktion beschrieben, welche die Ausführungsbeispiele gemäß der Figuren 1 bis 10 betrifft. Der Abscheider 1 ist beispielsweise als Leichtflüssigkeitsabscheider ausgebildet, mit dem es möglich ist, unterschiedliche Situationen im Betrieb des Abscheiders 1 zu erfassen, auszuwerten und insbesondere schnurlos an ein Warngerät 2 weiterzuleiten. Das Warngerät 2 ist hier beispielsweise in einem vom Abscheider 1 entfernt gelegenen Gebäude 3 untergebracht.

Der Abscheider 1 weist gemäß den teilweise geschnittenen Ansichten in den Figuren 1 bis 10 einen Behälter 4 zur Aufnahme eines Flüssigkeitsgemisches mit Flüssigkeiten unterschiedlicher Dichte auf. Der Behälter 4 umfasst einen Boden 4a, gegenüberliegende Seitenwände 4b, 4c und einen Deckel 4d. Über ein Einlaufrohr 5, das in einen an seiner Unterseite offenen Einlaufstutzen 6 mündet, kann das Flüssigkeitsgemisch in den Abscheider 1 gelangen. Über ein Auslaufrohr 7 kann etwas unterhalb des Einlaufsrohres 5 an der gegenüberliegenden Seitenwand 4c die Flüssigkeit wieder den Abscheider 1 verlassen. Dazu ist am Boden 4a des Abscheiders 1 eine Ablassöffnung 8 in einer Auslassleitung 9 vorgesehen. Die Auslassleitung 9 umfasst eine Bodenleitung 9a und eine dazu abgewinkelte Wandleitung 9b, welche entlang der Seitenwand 4c bis zum Auslaufrohr 7 führt. Außerdem ist im Abscheider 1 eine vertikal sich von der Ablassöffnung 8 bis kurz unterhalb des Deckels 4d erstreckende Führung 10 vorgesehen, in welche die Flüssigkeit im Abscheider 1 eintreten kann und in der sich der Schwimmer 11 befindet. Der Schwimmer 11 kann abhängig von der Art und/oder Menge der im Abscheider 1 befindlichen Flüssigkeit innerhalb der Führung 10 sich in vertikaler Richtung bzw. gemäß des Doppelpfeils P1 (siehe Figur 1) nach oben und unten in der Flüssigkeit bewegen.

Der Schwimmer 11 ist so austariert, dass er auf einer Flüssigkeit 12 etwas über deren Oberfläche herausragend schwimmt. Gelangt der Schwimmer 11 mit seiner Unterseite an die Ablassöffnung 8 wird diese verschlossen. In diesem Zustand kann keine Flüssigkeit mehr den Abscheider über die Ablassöffnung 8 bzw. das Auslaufrohr 7 verlassen.

Wird das Flüssigkeitsgemisch über das Einlaufrohr 5 in den Abscheider 1 gebracht, erfolgt eine Trennung der unterschiedlichen Flüssigkeitsanteile im Abscheider 1 physikalisch durch die Schwerkraft. So kann eine vertikale Schichtung der Flüssigkeiten 12 und 20 mit unterschiedlicher Dichte entstehen.

Beim Betrieb des Abscheiders 1 können verschiedene Situationen auftreten, welche in den Figuren gezeigt sind.

Figur 1 zeigt einen Normalzustand des mit einer Flüssigkeit gefüllten bzw. beaufschlagten Abscheiders 1. Die Flüssigkeit 12 kann über die freie Ablassöffnung 8 bzw. die Auslassleitung 9 den Abscheider 1 verlassen.

Erfindungsgemäß sind an der Führung 10 mehrere Permanentmagnete 13a bis 13f entlang der vertikalen Erstreckung der Führung 10 voneinander beabstandet fest positioniert. Im Schwimmer 11 sind nahe einer Außenwandung des Schwimmers 11, die zu der Seite der Führung 10 benachbart ist, an welche die Permanentmagnete 13a bis 13f positioniert sind, mehrere hier drei sogenannte Reed-Schalter 14, 15 und 16 untergebracht. Die Reed-Schalter 14, 15 und 16 sind elektrisch verbunden mit einer Sendeeinheit 17, welche im Inneren des Schwimmers 11 untergebracht ist. Die Reed-Schalter 14, 15, 16 sind nur geschaltet, wenn sie benachbart zu einem der Permanentmagneten 13a bis 13f sind und sind andernfalls selbsttätig nicht geschaltet.

Kommt durch die vertikale Bewegung des Schwimmers 11 entlang der Führung 10 ein Reed-Schalter 14, 15, 16 in unmittelbare Nachbarschaft zu einem der Permanentmagneten 13a bis 13f, so wird durch das jeweilige Magnetfeld des entsprechenden Permanentmagneten 13a bis 13f der entsprechende benachbarte Reed-Schalter 14, 15, 16 so geschaltet, dass ein elektrischer Kontakt, der jedem Reed-Schalter 14, 15, 16 jeweils zugeordnet ist, geschlossen wird. Damit wird zu jedem Reed-Schalter 14, 15, 16 ein bestimmtes Signal generiert, das von der Sendeeinheit 17 erzeugt und gemäß der Funkübertragung 18 an das Warngerät 2 gesendet wird. Das Warngerät 2 umfasst insbesondere ein Auswertegerät für das von der Sendeeinheit 17 erhaltene Signal. Insbesondere kann ein entsprechender Alarm ausgelöst oder eine Warnmeldung gemacht werden.

Die alternative Anordnung gemäß der schematisierten Darstellung aus Figur 2 umfasst ein abgeschirmtes Kabel 19, beispielsweise ein dünnes abgeschirmtes Antennenkabel, das aus Explosionsschutzgründen aus dem explosionsgefährdeten Bereich innerhalb des Abscheiders 1 von der Sendeeinheit 17 bis nach außen außerhalb des Abscheiders 1 führt und von dort über eine Antenne 19a eine Funkübertragung 18 zu dem Warngerät 2 in dem Gebäude 3 ermöglicht.

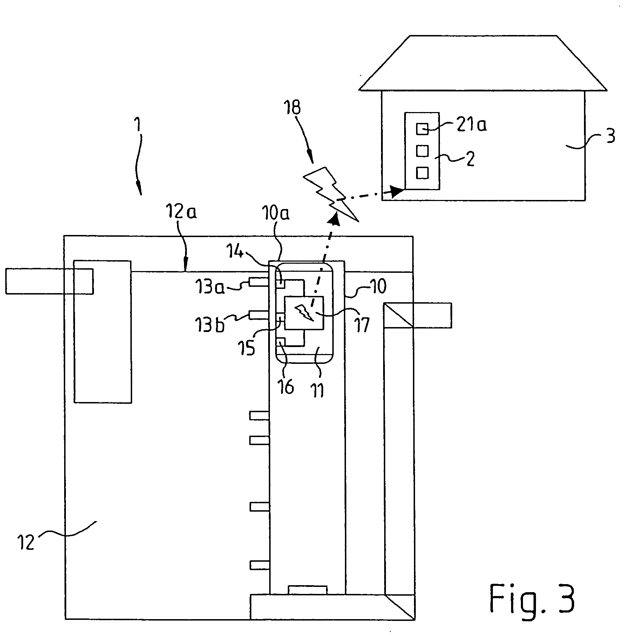

Figur 3 zeigt einen Rückstausituation im Abscheider 1, bei welcher der Flüssigkeitspegel 12a ein Niveau erreicht, bei welchem der Schwimmer 11 an einem Abschnitt 10a der Führung 10 anstößt. Dabei kommen die beiden Reed-Schalter 14 und 15 in Wirkkontakt mit dem fest positionierten Permanentmagneten 13a und 13b. Dadurch werden elektrische Kontakte von den Reed-Schaltern 14 und 15 geschlossen, durch welche die Sendeeinheit 17 ein definiertes Signal erzeugt aussendet. Das Warngerät 2 wertet das empfangene Signal aus und kann in einem Anzeigefeld 21a beispielsweise optisch ein Warnung absetzen.

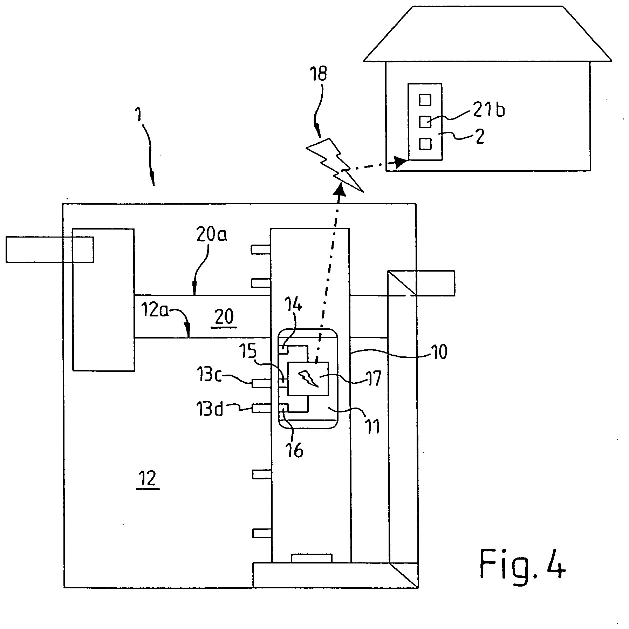

In Figur 4 ist eine Dicke einer Leichtflüssigkeitsschicht auf der Flüssigkeit 12 erreicht. Der Schwimmer 11 erreicht eine Position, in welcher die beiden Reed-Schalter 15 und 16 in Wirkverbindung mit den Permanentmagneten 13c und 13d gelangen, wodurch die Sendeeinheit 17 ein dementsprechendes Signal per Funkübertragung 18 an das Warngerät 2 aussendet, wobei in einem Anzeigefeld 21b eine optische Warnmeldung erfolgt. Der weitere Reed-Schalter 14 wird nicht von einem Permanentmagneten beeinflusst, so dass der elektrische Kontakt, welcher dem Reed-Schalter 14 zugeordnet ist, nicht geschlossen, sondern unterbrochen ist.

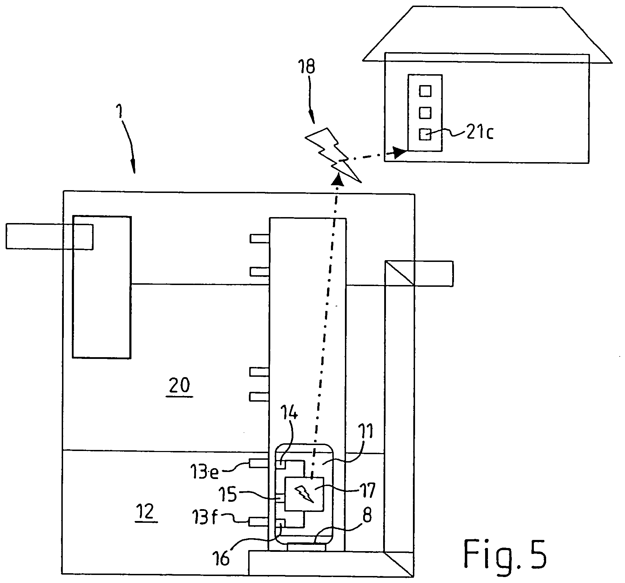

In Figur 5 wird ein Betriebszustand gezeigt, bei welchem die Anlage gesperrt ist. Hierbei hat die Flüssigkeit 20, beispielsweise Öl, Benzin oder dergleichen, eine solche Schichtdicke erreicht, dass der Schwimmer 11 selbsttätig die Ablassöffnung 8 verschließt. Dabei kommt der oberste Reed-Schalter 14 und der unterste im Schwimmer 11 positionierte Reed-Schalter 16 in Wirkverbindung mit den Permanentmagneten 13e bzw. 13f. Entsprechend der oben beschriebenen Funktionsweise wird in einem weiteren Anzeigefeld 22 eine entsprechende optische Warnmeldung ausgelöst.

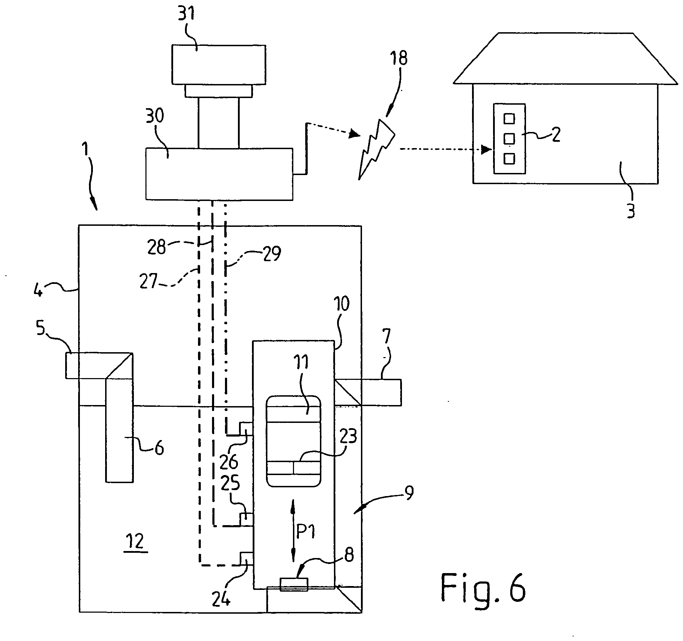

Eine alternative erfindungsgemäße Anordnung zeigen die Figuren 6 bis 10. Der Aufbau des Abscheiders 1 im Hinblick auf den Behälter 4 mit Einlaufrohr 5, Einlaufstutzen 6, Ablassöffnung 8, Auslassleitung 9 mit Auslaufrohr 7 und Führung 10 ist entsprechend zu der Anordnung gemäß der Figuren 1 bis 5.

Im Schwimmer 11 sind keine Reed-Schalter sondern ist ein Permanentmagnet 23 integriert, der mit der vertikalen Bewegungsmöglichkeit des Schwimmers 11 gemäß Doppelpfeil P1 mit einem der Reed-Schalter 24, 25 oder 26, die fest positioniert an der Führung 10 vorhanden sind, zusammenwirken kann. Die Reed-Schalter 24, 25 und 26 sind über Leitungen 27, 28 und 29 mit einer außerhalb des Abscheiders angeordneten Auswerteeinheit 30 mit integrierter Sendeeinheit verbunden. Der Auswerteeinheit 30 wird über ein Stromversorgungseinheit 31 mit elektrischem Strom versorgt. Die Stromversorgungseinheit 31 kann mittels Batterie und/oder Solarladegerät und/oder Akkugerät für die Strombereitstellung versorgt werden. Von der Auswerteeinheit 30 kann über den integrierten Sender mittels Funkübertragung 18 ein Signal an ein Warngerät 2 bzw. einen Empfänger in einem Gebäude 3 kabellos übermittelt werden, entsprechend der Anordnung gemäß der Figuren 1 bis 5.

Prinzipiell kann zu jedem Reed-Schalter 24, 25, 26 ein eigenes bzw. bestimmtes Signal zugeordnet und erzeugt werden oder alternativ kann in der Auswerteeinheit 30 für jede der Leitungen 27, 28, 29 ein eigener Eingang zugeordnet sein, wodurch ein dazugehöriges Signal erzeugt bzw. moduliert wird. Das Grundprinzip der Erkennung von Betriebszuständen mit Hilfe der Schwimmerpositionsbestimmung ist z.B. vergleichbar mit der Anordnung gemäß der Figuren 1 und 3 bis 5.

Figur 6 zeigt einen Normalzustand im Abscheider 1 ohne Warnmeldung, dies bedeutet, dass die gezeigte Funkübertragung entweder nicht aktiv ist oder nur zu Testzwecken von Zeit zu Zeit aktiv wird z.B. zur Funktionskontrolle. Dadurch wird auch keine optische bzw. akustische Warnung durch das Warngerät 2 ausgelöst.

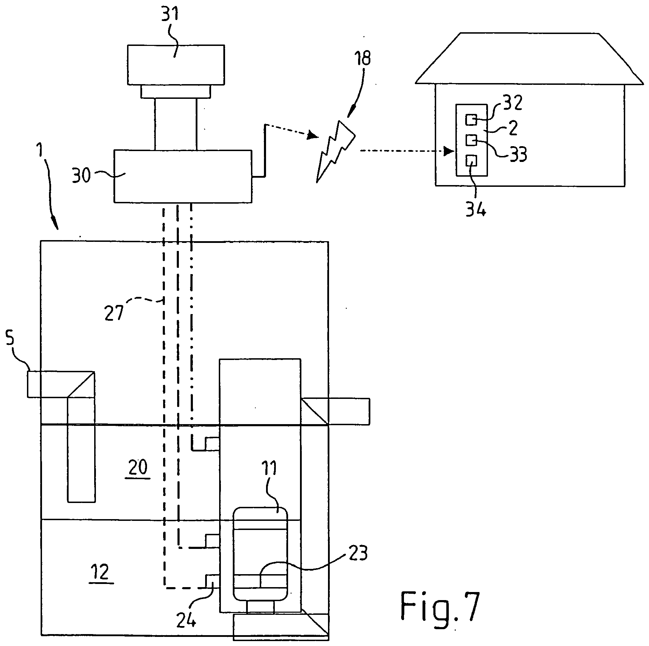

In Figur 7 ist der Betriebszustand im Abscheider gezeigt, bei welcher der Ablauf gesperrt ist bzw. eine Rückstausituation gegeben ist, entsprechend zu Figur 5. Der Permanentmagnet 23 ist in dieser Position des Schwimmers 11 in Wirkverbindung zum Reed-Schalter 24. Im Warngerät 2 wird beispielsweise das Anzeigefeld 33 der Anzeigefelder 32, 33 und 34 belegt.

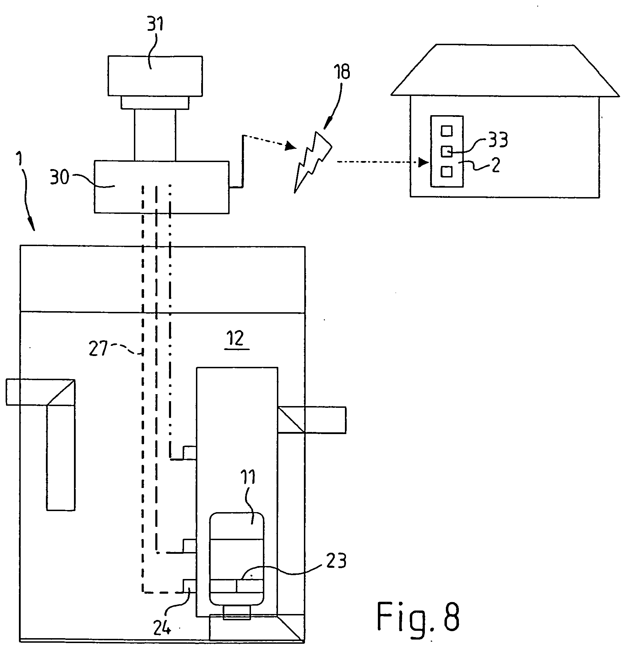

In Figur 8 ist im Abscheider 1 der Ablauf über den Schwimmer 11 gesperrt, wodurch ein Betriebszustand "Rückstau" als kritische Situation festgestellt wird. Hierbei kommt es durch das Zusammenspiel des Permanentmagneten 23 mit dem Reed-Schalter 24 zu einer Warnmeldung im Anzeigefeld 33.

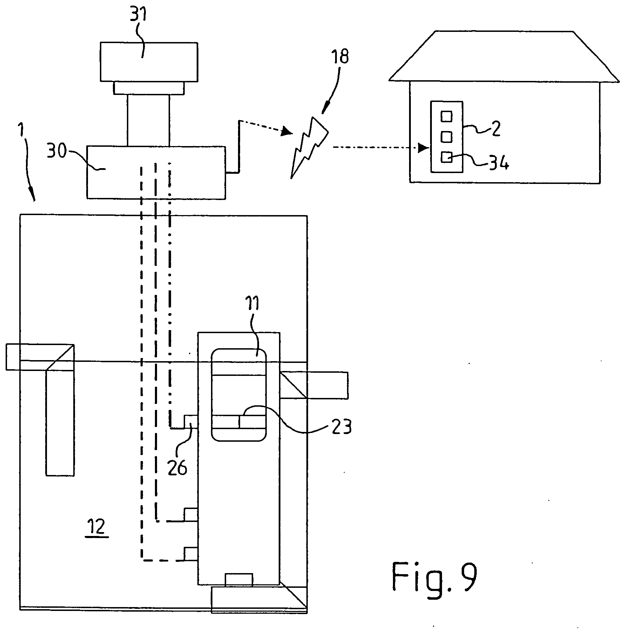

Figur 9 zeigt einen Betriebszustand, in welchem ebenfalls ein Rückstau im Abscheider 1 herrscht. Allerdings ist lediglich eine Flüssigkeit 12 im Abscheider vorhanden, wobei der Rückstau beispielsweise vom Hauptkanal bzw. zulaufseitig ausgelöst wird oder ein Ablauf aus dem Abscheider 1 nicht möglich ist. In diese Situation kommt der Permanentmagnet 23 in Wirkverbindung mit dem Reed-Schalter 26. Im Warngerät 2 wird im Anzeigefeld 34 eine entsprechende Warnmeldung angezeigt.

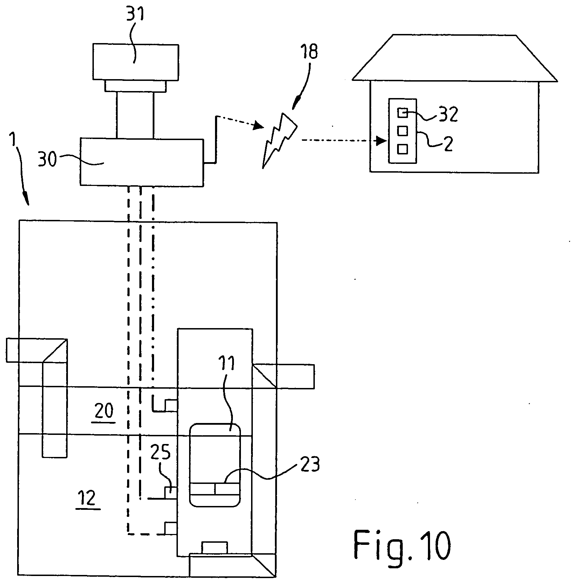

Figur 10 zeigt schließlich eine Betriebssituation, bei welcher oberhalb der Flüssigkeit 12 die Flüssigkeit 20 eine über die Position des Reed-Schalters 25 erfassbare bzw. vorgegebene Flüssigkeitsschichtdicke erreicht hat. Der Permanentmagnet 23 ist in Wirkverbindung mit dem Reed-Schalter 25, so dass im Anzeigefeld 32 ein entsprechendes Warnsignal optisch bzw. akustisch bereitgestellt wird.

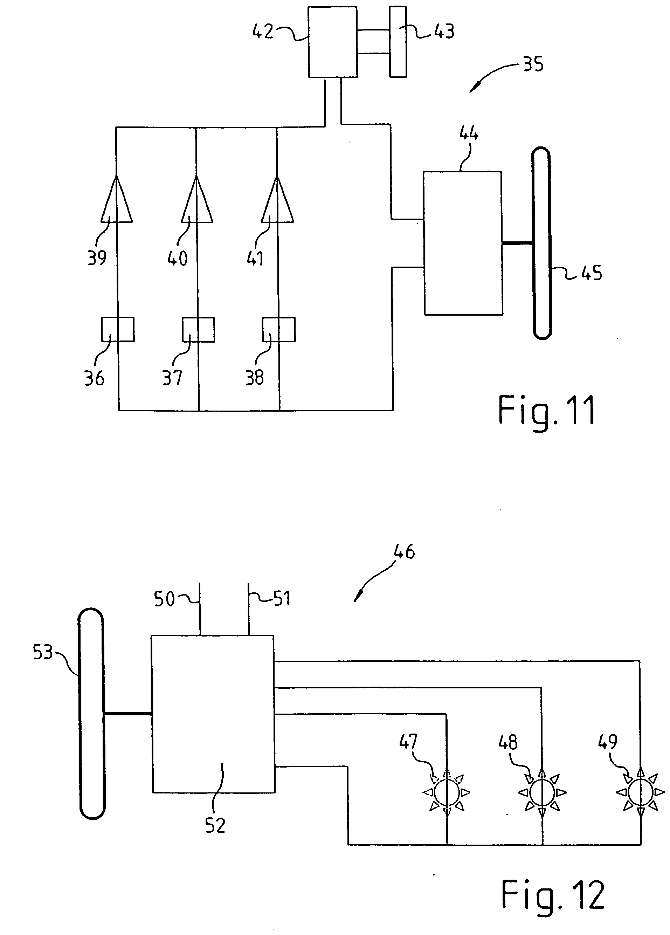

Figur 11 zeigt stark schematisiert ein beispielhaftes Fühler-und Senderteil 35. Dieses umfasst beispielsweise drei parallel geschaltete Reed-Schalter 36, 37, 38. Außerdem ist jedem Reed-Schalter 36, 37, 38 ein elektronisches Bauteil 39, 40, 41 verbunden zugeordnet. Für eine Stromversorgung ist eine Stromversorgungseinheit 42 vorgesehen, welche beispielsweise Batterien bzw. Akkus umfasst und mittels Solarzellen 43 aufladbar ist. Als Sendeeinheit ist in der Leitungsanordnung gemäß Figur 11 ein Radioteil 44, insbesondere mit Ton- und Radiofrequenzgenerator bzw. Modulator vorgesehen. Am Radioteil 44 ist außerdem eine Senderantenne 45 ausgebildet. Das Fühler- und Senderteil 35 steht nur dann unter Strom, wenn einer von den Reed-Schaltern 36, 37 und 38 geschlossen ist. Durch das jeweilige elektronische Bauteil wird die Tonfrequenz so geändert, dass zu jedem Reed-Schalter 36 bis 38 eine bestimmte Tonfrequenz zuzuordnen ist. Die betreffende Tonfrequenz kann mit Hilfe einer erzeugten Radiofrequenz im Radioteil bzw. mit der Sendeantenne 45 ausgestrahlt werden.

Es ist auch möglich, die Radiofrequenz durch einen elektronischen Schalter im bestimmten Rhythmus zu unterbrechen, beispielsweise in der Art von Morsesignalen, und diese auszustrahlen. Nach der Ausstrahlung der Signale, was beispielsweise ein bis zwei Sekunden dauern kann, schaltet das ganze System auf Stand-by Betrieb um. Nach einer bestimmten bzw. voreinstellbaren Zeit schaltet sich das Gerät erneut ein und sendet ein erneutes Signal, vorausgesetzt die Ursache für eine Alarmsendung bzw. Signalsendung im Abscheider ist noch nicht behoben. Falls die Ursachen eines Warnsignals behoben sind, wird der Hauptstromkreis durch einen Reed-Schalter unterbrochen, wobei auch die Stand-by Stellung gelöscht wird. Das Gerät arbeitet wieder im stromlosen Zustand.

Figur 12 zeigt ebenfalls stark schematisiert ein Empfängerteil 46 mit in Parallelschaltung verbundenen Warnsignalelementen 47, 48 und 49. Außerdem ist ein über Stromversorgungsleitungen 50, 51 versorgter Empfänger mit Demodulator und Alarmgeber als Einheit 52 vorhanden, welche mit den Warnsignalelementen 47, 48, 49 verbunden ist. Außerdem ist an der Einheit 52 eine Empfängerantenne 53 vorgesehen.

Die Einheit 52 empfängt die Signale von einem Senderteil, beispielsweise von der Senderantenne 45 des Fühler- und Senderteils 35 gemäß Figur 11. Mittels eines Demodulators kann aus den gesendeten Signalen die Information, beispielsweise die Tonfrequenz erfasst bzw. herausgefiltert werden. Diese Tonfrequenz wird in eine Weiche geleitet, die je nach Frequenz das zugehörige Warnlämpchen beispielsweise entsprechend einer kritischen Betriebssituation für Rückstau, maximale Ölschicht oder Anlage gesperrt usw. einschaltet. Alternativ bzw. zusätzlich kann die Warnanlage aktiviert werden, um beispielsweise ein Warnlicht oder eine Warnhupe oder eine SMS-Nachricht per Telefon zu erzeugen. Es ist auch denkbar, dass die Meldung in eine Rechenanlage zur Fernüberwachung geleitet wird.

Für eine Empfangsbereitschaft benötigt das Empfängerteil 46 mit Warnsignalgeber ungefähr so viel Strom, wie ein übliches Mobiltelefon für die gleiche Funktion. Erst wenn ein Signal empfangen wird, wird mehr Strom, insbesondere für die Alarmanlage bzw. Licht, Hupe oder Telefon benötigt.

Eine Programmierung des Empfängerteils 46 kann beispielsweise folgendermaßen vorgenommen werden. Werden alle Signalarten hintereinander innerhalb von einer oder zwei Minuten aktiviert, bedeutet dies eine Funktionsprüfung des Gerätes und auch eine Reinigung des selbsttätigen Abschlusses bzw. des Schwimmers.

Sämtliche Ereignisse bezüglich der Betriebssituation im Abscheider können auf einem Datenträger gespeichert, beispielsweise auf eine Festplatte gebracht werden und dort jederzeit abgerufen bzw. protokolliert werden. Sämtliche Ereignisse im Abscheider aus einem Auswerte- bzw. Empfängergerät können per Funk in eine Datenzentrale übermittelt werden. Außerdem kann ein Auswertegerät auf eine Simulation programmiert werden, wobei die Simulation darin bestehen kann, dass ein Reed-Schalter anhand von einer manuellen vertikalen Bewegung des Schwimmers des selbsttätigen Abschluss hintereinander, beispielsweise in kurzer Zeit geschlossen und geöffnet wird, beispielsweise maximal zwei Minuten. Dieses Signal kann als Funktionsprüfung gespeichert werden. Anhand eingebauter Zeitmessung mit Datumsfunktion im Auswertegerät können beispielsweise die Intervalle der Funktionsprüfungen überwacht werden.

Prinzipiell kann die gesamte Anordnung auch ohne Funkübertragung mit fester Verkabelung funktionieren. Bei einer fest vorhandenen Verdrahtung von Komponenten können die Funkteile für die schnurlose Übertragung ausfallen, wodurch eine Kostensenkung bei Anschaffung des Gerätes möglich ist. Bei fester Verdrahtung der Warnanlage können die Reed-Schalter einen Hauptstromkreis unterbrechen. Auch bei fest verdrahteter Warnanlage wird nur in einer erfassten Schwimmerposition im Abscheider Strom im Normalbetrieb benötigt. Gegebenenfalls kann lediglich dauerhaft ein LED-Kontrolllämpchen vorhanden sein.

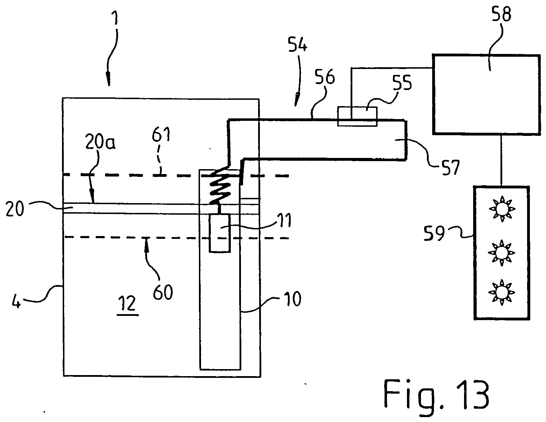

Figur 13 zeigt eine nicht erfindungsgemäße stark schematisierte Anordnung mit einem Abscheider 1, der ohne Zulauf bzw. Ablauf dargestellt ist. Die interessierende Position des Schwimmers 11 wird über eine Druckmessanordnung 54 erfasst. Hierzu wird ein Differenzdruckumwandler 55 eingesetzt, der eine erste Zuleitung 56 und eine zweite Zuleitung 57 aufweist. Die erste Zuleitung 56 dient zur Verbindung mit einem Druck-Messpunkt am Schwimmer 11 auf dem Messniveau 60 und die zweite Zuleitung 57 zur Verbindung mit einem Luftdruck-Messpunkt an der Führung 10 oberhalb der Flüssigkeit 20 auf dem Messniveau 61. Außerdem ist der Differenzdruckumwandler 55 mit einem Auswertegerät 58 verbunden. Im Auswertegerät 58 wird ein gemessener Luftdruck in eine Flüssigkeitssäule, beispielsweise in der Einheit Zentimeter umgerechnet und ständig mit im Auswertegerät 6 einprogrammierten Grenzwerten verglichen. Sobald ein Grenzwert erreicht ist, wird ein Warnsignal z.B. über eine Anzeigeeinheit 59 ausgegeben.

Am Ende der Zuleitung 56 wird ein auf den Schwimmer 11 wirkender Druck P1 ermittelt, der abhängig von dem hydrostatischen Druck am Schwimmer 11 bzw. der Eintauchtiefe des Schwimmers 11 in der darüber liegenden Flüssigkeit ist, z.B. gemessen auf dem Messniveau 60.

Der gemessene Druck am Schwimmer 11 entspricht einem linear proportional ansteigenden hydrostatischen Druck in einer Flüssigkeit, steigend mit der Flüssigkeitstiefe. Je tiefer der Schwimmer 11 in die Flüssigkeit 20 hineintaucht, desto größer wird der Druck der durch die Flüssigkeit 20 auf den Schwimmerkörper wirkt. Aus dem jeweiligen am Schwimmer 11 gemessenen Druck der Flüssigkeit kann man die jeweilige Position des Schwimmers 11 bestimmen.

Befindet sich eine Flüssigkeit mit geringerer Dichte als die Flüssigkeit 12 im Abscheider 1, geht der Schwimmer mit der Trennschicht nach unten. Wird eine maximale Flüssigkeitsschicht der Flüssigkeit 20 erreicht, wird auch ein voreingestellter Grenzwert in der Zuleitung 56 erreicht und das Auswertegerät 58 gibt ein Alarmsignal "maximale Ölschicht".

Bei Rückstau, wenn der Schwimmer 11 samt Drucksensor oben schwimmt bis die Oberkante der Führung 10 erreicht ist, wird der gemessene Druck in der Zuleitung 57 größer als der gemessene Druck in der Zuleitung 56. Das Auswertegerät 58 ist insbesondere so programmiert, dass in diesem Fall ein Alarmbefehl "Rückstau" als Alarmsignal erscheint.

Die Anordnung gemäß Figur 13 benötigt lediglich einen Sensor in Form des Differenzialdruckumwandlers 55, um alle relevanten Betriebssituationen im Abscheider 1 zu erfassen, zu dokumentieren bzw. zu verarbeiten.
Ein Sensor bzw. der Differenzialdruckumwandler kann auch außerhalb vom Abscheider 1 platziert werden, wodurch insbesondere der Abscheider 1 stromfrei sein kann.
Der Differenzialdruckumwandler 55 befindet sich insbesondere nicht im Flüssigkeitsbereich, wodurch die Beanspruchung des Differenzialdruckumwandlers 55 z.B. durch aggressive Flüssigkeit wesentlich niedriger, als bei herkömmlichen Sensoren ist.
Schließlich kann vom Auswertegerät bzw. mit einer Sendeeinheit ein Signal drahtlos an ein Auswertegerät oder an ein Warnsignalgerät übertragen werden. Dies ist möglich, weil ein vergleichsweise niedriger Stromverbrauch des Differenzdruckumwandlers eine solare Stromversorgung ermöglicht. Grundsätzlich kann die Anordnung gemäß Figur 13 zum Nachrüsten in bestehenden Anlagen, bei Neuanlagen oder auch als Kombination mit einem selbsttätigen Abschluss und Warnanlage in einem realisiert werden.

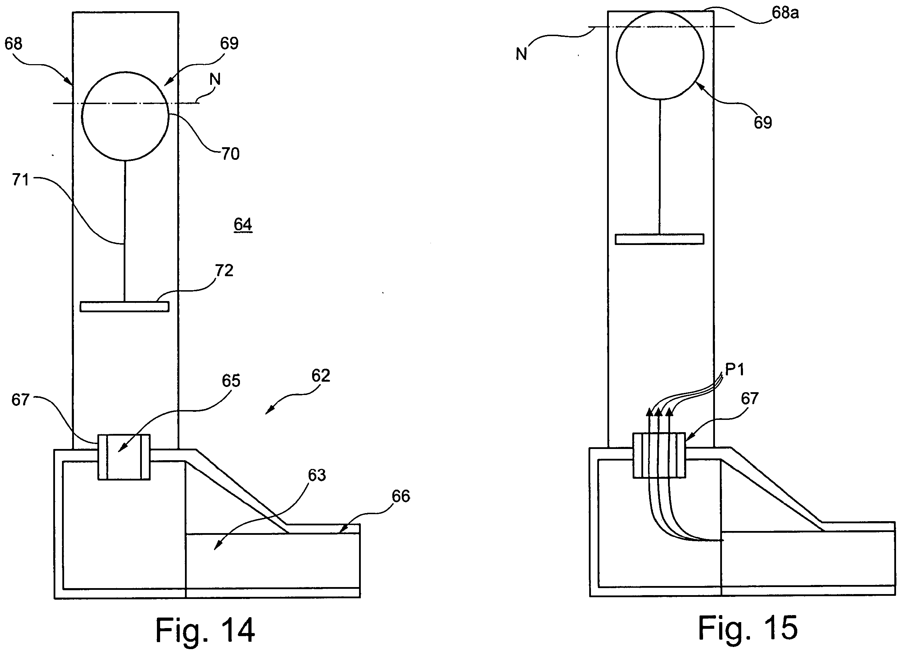

Figur 14 zeigt ausschnittweise ein Behälterinneres eines Leichtflüssigkeitsabscheiders, in dem sich Flüssigkeit z.B. Wasser mit einem angedeuteten Flüssigkeitsniveau N befindet. Im Bodenbereich des Behälters ist für das Abfließen der Flüssigkeit ein Ablauf 62 mit einem Ablaufsiphon 63 vorgesehen, der mit einem Behälterinneren 64 des Leichtflüssigkeitsabscheiders über eine Ablauföffnung 65 verbunden ist. Oberhalb der Ablauföffnung 65 erstreckt sich eine Schwimmerkörperführung 68 nach oben, für eine laterale Führung eines innerhalb der Schwimmerkörperführung 68 in vertikaler Richtung bewegbaren, in der Flüssigkeit schwimmfähigen Schwimmerkörpers 69. Die Ablauföffnung 65 wird hier beispielsweise durch eine Rohrhülse 67 umschlossen. Im Normalbetrieb bzw. bei funktionsgerechtem Betrieb des Leichtflüssigkeitsabscheiders kann über die Ablauföffnung 65 und den Ablaufsiphon 63 die Flüssigkeit aus dem Behälterinneren 64 über die Schwimmerkörperführung 68 in das Ablaufrohr 66 gelangen und von dort über ein nicht dargestelltes Steigrohr, das sich an das Ablaufrohr 66 anschliest, nach oben steigen und bis zu einem nicht dargestellten Überlaufniveau gelangen. Von dort kann die den Behälter verlassende Flüssigkeit z.B. in ein Abwassersystem z.B. einen Abwasser-Hauptkanal münden.
Der Schwimmerkörper 69 schwimmt gemäß Figur 14 und 15 in der Flüssigkeit entsprechend dem Flüssigkeitsniveau N, wobei der Schwimmerkörper 69 etwas über das Flüssigkeitsniveau N übersteht. Die Schwimmerkörperführung 68 weist nicht ersichtliche offene Wandabschnitte auf, so dass ein Flüssigkeitsspiegel im Behälterinneren 64 dem Flüssigkeitsniveaus N innerhalb der Schwimmerkörperführung 68 entspricht.

Der Schwimmerkörper 69 ist hier als bekannter selbsttätiger Verschluss für den Leichtflüssigkeitsabscheider ausgebildet und umfasst einen Schwimmerkopf 70, hier als hohle Kugel ausgebildet, eine Schwimmerstange 71 und einen Schwimmerteller 72, welcher unten an der Schwimmerstange 71 fest angebracht ist.
Grundsätzlich kann der selbsttätig verschließende Schwimmerkörper auch anders ausgestaltet sein, z.B. als Hohlkörper, in dem ein Gas wie z.B. Luft dicht eingeschlossen ist und in dem zum Austarieren eine Flüssigkeit oder z.B. Sand eingefüllt ist. Außerdem ist im Schwimmerkörper noch der Permanentmagnet integriert. Am Schwimmerkörper ist außerdem ein Ventilabschluss z.B. ein Schwimmer- bzw. Gummiteller ausgebildet, der den Ablauf verschließen kann.

Oberhalb des Flüssigkeitsniveaus N kann sich im Leichtflüssigkeitsabscheider eine Leichtflüssigkeit mit geringerer Dichte als die Flüssigkeit mit dem Flüssigkeitsniveau N ausbilden. Der Schwimmerkörper 69 ist so austariert, dass er auf dem Wasser schwimmt, in der Leichtflüssigkeit aber untergeht. So wandert bei einem Zulaufgemisch aus z.B. Wasser und Leichtflüssigkeit nach deren schichtweisen Trennung im Behälter und dem Abfließen eines Teils des unten liegenden Wassers durch den offenen Ablauf 62 der selbsttätige Verschluss mit wachsender Leichtflüssigkeitsschicht nach unten. Bei Erreichen einer maximalen Leichtflüssigkeitsspeicherkapazität des Leichtflüssigkeitsabscheiders, wird durch dichtes Aufsitzen des Schwimmertellers 72 auf dem oberen Rand der Rohrhülse 67 die Ablauföffnung 65 verschlossen. So wird vermieden, dass Leichtflüssigkeit oberhalb des Flüssigkeitsniveaus N aus dem Behälterinneren 64 austreten kann.

Stellt sich nun gemäß Figur 15 von der Seite des Abwasser- bzw. Hauptkanals eine Rückstausituation ein, steigt bei bisherigen Anordnungen der Schwimmerkörper 69 mit dem steigenden Flüssigkeitsniveau nach oben. Mit dem nach oben steigenden Niveau N steigt auch die Leichtflüssigkeitsschicht nach oben und kann über einen Zulauf aus dem Behälterinneren nach außen treten, was unerwünscht ist.

In Figur 15 ist die Umkehrung der regelmäßigen Strömungsrichtung durch den Ablauf 62 durch Pfeile P1 symbolisch dargestellt. Das Flüssigkeitsniveau N in Figur 15 nimmt den Schwimmer mit nach oben, wobei der Schwimmerkörper 69 bis maximal zum Deckel 68a der Schwimmerkörperführung 68 steigen kann.

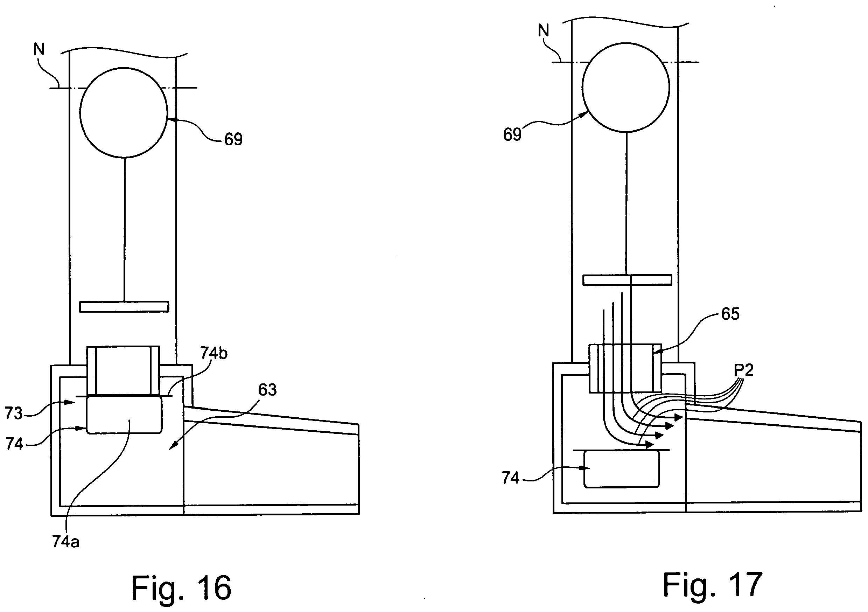

Ausgehend von der Anordnung gemäß Figur 14 und 15 zeigen die Figuren 16 bis 19 ein erstes Ausführungsbeispiel einer erfindungsgemäßen Rückstausicherung. Diese umfasst ein Rückstauventil 73, das hier als Rückstauschwimmer 74 mit einem Schwimmerhauptkörper 74a und einem Verschlussteller 74b zum dichten Verschließen der Ablauföffnung 65 unterseitig an der Rohrhülse 67 ausgebildet ist.

In Figur 16 befindet sich der Schwimmerkörper 69 in Schwimmposition, wobei keine Flüssigkeit in den Behälter zuläuft bzw. abläuft. Der Schwimmerkörper 69 schwimmt auf der im Abscheider befindlichen Flüssigkeit bzw. folgt dem Flüssigkeitsniveau N gemäß der Trennlinie zwischen der Flüssigkeit wie z.B. Wasser und der Leichtflüssigkeit. Der Rückstauschwimmer 74 schwimmt in der Flüssigkeit im Ablaufsiphon 63 und wird durch Auftriebskraft unterseitig an die Rohrhülse 67 gedrückt und verschließt damit den Ablauf 62.

Wenn ankommende Flüssigkeit in den Leichtflüssigkeitsabscheider zufließt, z.B. Abwasser einer Autowaschanlage, einer Tankstelle oder einer KFZ-Werkstätte, kann die schwerere Flüssigkeit bzw. das restliche von der Leichtflüssigkeit getrennte Abwasser ungehindert abfließen, was in Figur 17 gemäß der Pfeile P2 angedeutet ist. Der Rückstauschwimmer 74 wird dabei durch den Überdruck bzw. den höheren hydraulischen Druck im Behälterinneren gegenüber dem hydraulischen Druck im Ablaufsiphon 63 nach unten gedrückt und die Ablauföffnung 65 ablaufseitig freigegeben.

Sobald sich die Druckverhältnisse ausgeglichen haben, schließt der Rückstauschwimmer 74 die Ablauföffnung 65 gemäß Figur 16.

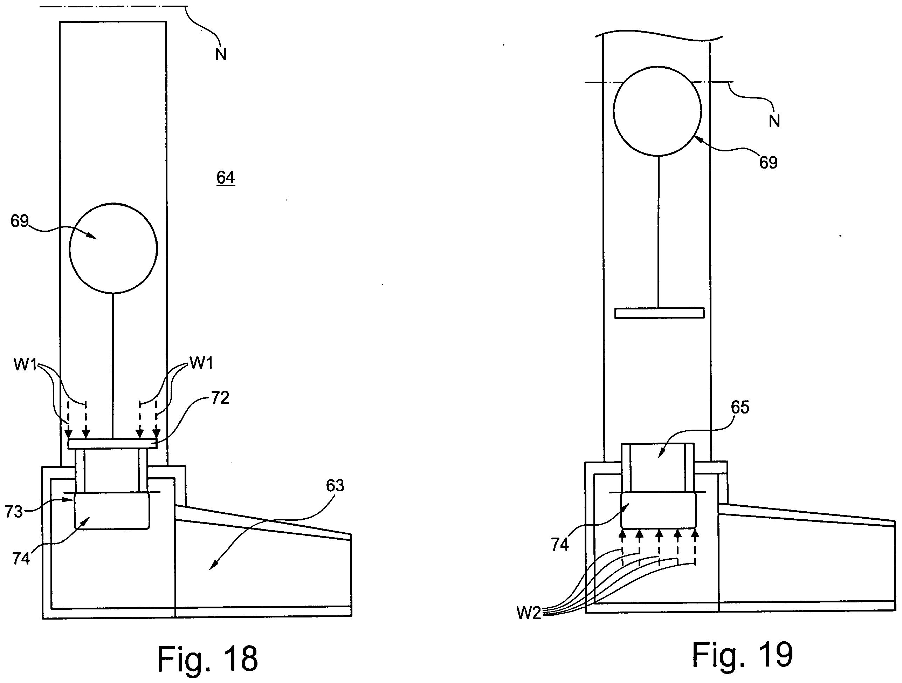

Die Situation gemäß Figur 18 kann eintreten, wenn zum Beispiel eine hydraulische Überlastung des Leichtflüssigkeitsabscheiders vorliegt, insbesondere bei stark überhöhtem Zulauf in den Leichtflüssigkeitsabscheider bzw. einem zu geringen Ablauf aus diesem. Durch Sogwirkung wird der Schwimmerteller 72 gegen die Rohrhülse 67 gezogen und dichtet diese von oben ab. Durch unmittelbar danach weiter zufließende Flüssigkeit in den Behälter entsteht ein hydraulischer Überdruck, der im Behälterinneren 64 und auf den Schwimmerteller 72 wirkt und damit nicht dem Flüssigkeitsniveau N nach oben folgen kann. Der Schwimmerkörper 69 drückt dadurch mit seinem Schwimmerteller 72 gegen die Rohrhülse 67 und verschließt die Ablauföffnung 65.Im Ablaufsiphon 63 stellt sich ein geringerer Druck als im Behälterinneren 64 ein, also ein Unterdruck. Der auf den Schwimmerteller 72 wirkende hydraulische Überdruck ist durch Pfeile W1 symbolisiert.

Eine entsprechende Verschlusssituation tritt auch dann ein (nicht dargestellt), wenn eine maximale Leichtflüssigkeitskapazität des Leichtflüssigkeitsabscheiders erreicht ist.

Dieser selbsttätige Verschluss bleibt solange aktiviert, bis sich die Druckverhältnisse, beispielsweise durch Absaugen von Flüssigkeit aus dem Behälterinneren 64, wieder verändert. Auch durch Ziehen des Schwimmerkörpers 69 weg von der Rohrhülse 67 kann der Ablauf 62 wieder geöffnet werden.

Der Rückstauschwimmer 74 wird gemäß Figur 18 und 19 durch Auftriebskräfte an die Rohrhülse 67 verschließend angedrückt.

Figur 19 zeigt eine Situation, die anschließend an die Situation gemäß Figur 18 beispielsweise beim Abpumpen der Leichtflüssigkeitsschicht oberhalb des Niveaus N in Figur 19 sich einstellt. Ein dabei auf den Rückstauschwimmer 74 wirkender hydraulischer Überdruck im Ablaufsiphon 63 ist in Figur 19 durch Pfeile W2 angedeutet.

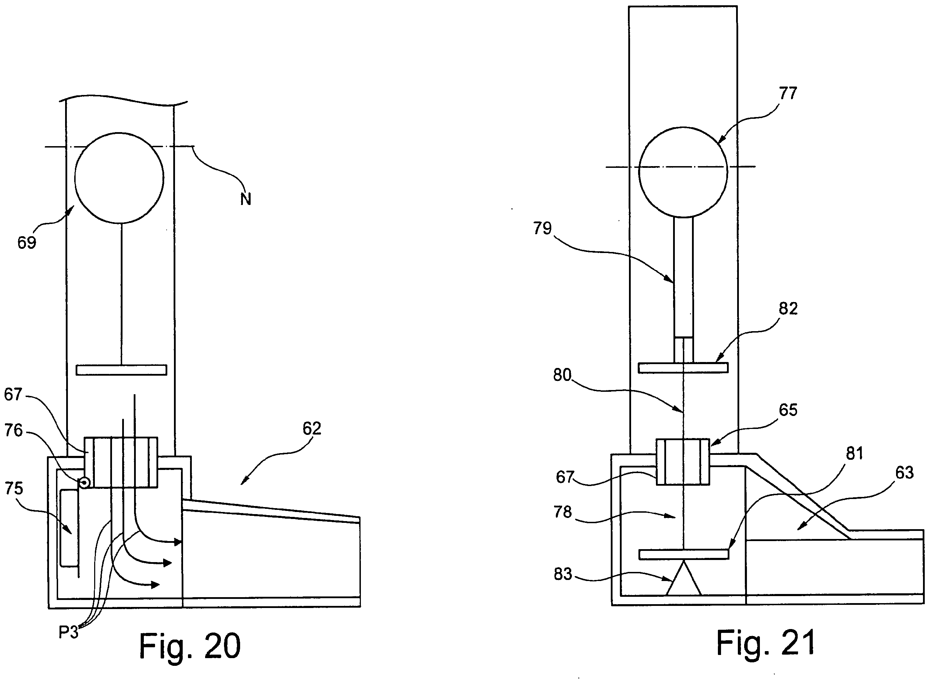

Figur 20 zeigt einen Rückstauschwimmer 75, welcher auf der Seite des Ablaufsiphons 63 an der Rohrhülse 67 schwenkbar um eine Schwenkachse 76 gelagert ist. Wie Figur 17 zeigt auch Figur 20 eine normale Betriebssituation mit durch den Ablauf 62 nach außen ablaufendem Abwasser, was mit Pfeilen P3 angedeutet ist.

Die Figuren 21 bis 24 zeigen eine weitere alternative erfindungsgemäße Rückstausicherung mit einem Schwimmerkörper 77 und daran angekoppeltem Rückstauventil 78, wobei der Schwimmerkörper 77 wie oben erläutert als selbsttätiger Verschluss arbeitet. Im Unterschied zum Schwimmerkörper 69 umfasst der Schwimmerkörper 77 eine modifizierte Schwimmerstange 79 für eine Verschiebeanordnung eines Gestänges 80 des Rückstauventils 78. Das Gestänge 80 ist damit in vertikaler Richtung verschiebbar, wobei am unteren Ende des Gestänges 80 ein Rückstauteller 81 fest angebracht ist. Außerdem ist unten an der modifizierten Schwimmerstange 79 ein Schwimmerteller 82 vorhanden, um die Ablauföffnung 65 von oben zu verschließen. Im Normalzustand gemäß Figur 21 ruht der durch das Eigengewicht nach unten gesunkene Rückstauteller 81 auf einer Stütze 83 im Ablaufsiphon 63. Die Stütze 83 sorgt z.B. dafür, dass der Rückstauteller 81 regelmäßig von vorbeiströmender Flüssigkeit abgespült und dadurch sauber gehalten wird. Dieser Abspülvorgang wird zusätzlich durch die speziell verjüngenden Ausbildung der Wandungen des Ablaufsiphons 63 begünstigt.

Die Rohrhülse 67 ist mit ihrer Ober- und Unterseite auf die jeweilige abdichtende Seite des Schwimmertellers 82 und des Rückstautellers 81 abgestimmt, sodass diese jeweils sicher und dicht die Ablauföffnung 65 von oben und unten verschließen können. Der Schwimmerkörper 77 mit dem Schwimmerteller 82 schließt die Ablauföffnung 65 entsprechend der weiter vorne bereits erläuterten Betriebssituationen.

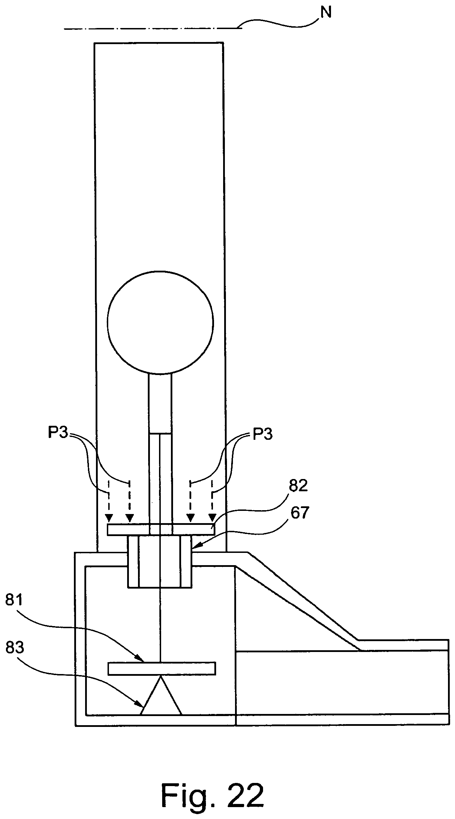

Gelangt weiterhin Flüssigkeit in den Behälter wirkt gemäß Figur 22 ein Überdruck (Pfeile P3) auf eine Oberseite des Schwimmertellers 82. Bei diesem Druckverhältnis hält der selbsttätige Verschluss mittels des Schwimmerkörpers 77 diesen in der entsprechenden geschlossenen Position solange, wie die Druckverhältnisse beispielsweise durch Absaugung der Behälterflüssigkeit oder das Ziehen des Schwimmerkörpers 77 nicht ausgeglichen wird. Der Rückstauteller 81 ruht auf der Stütze 83, wobei das Gestänge 80 frei in der Schwimmerstange 79 beweglich ist.

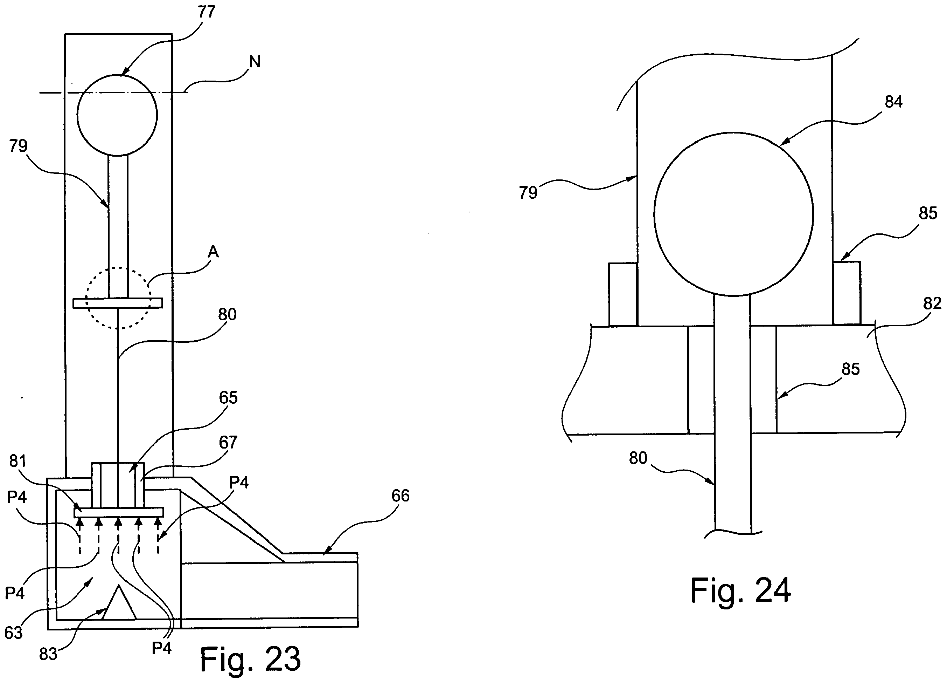

Figur 23 zeigt eine Situation, wonach ein Rückstau über den Ablaufsiphon 63 ansteht. Der Rückstauteller 81 wird dabei gemäß der schematisiert gezeigten Druckpfeile P4, welche den hydraulischen Druck auf der Ablaufseite bzw. im Ablaufsiphon andeuten sollen, und auch durch den gemäß dem Flüssigkeitsniveau N nach oben gestiegenen Schwimmerkörper 77 von unten gegen die Rohrhülse 67 gedrückt, so dass die Ablauföffnung 65 verschlossen ist. Figur 23 zeigt die Situation, in welcher der Schwimmerkörper 77 gerade so weit oben auf dem Flüssigkeitsniveau N schwimmt, dass eine maximale Verschiebestrecke des Gestänges 80 nach unten in der Schwimmerstange 79 erreicht ist und der mit dem Schwimmerkörper 77 gekoppelte Rückstauteller 81 auch durch die wirkende Auftriebskraft auf den Schwimmerkörper 77 nach oben gegen die Rohrhülse 67 gedrückt wird und das Verschließen der Ablauföffnung 65 von unten sichert.

Eine vergrößerte Ansicht des Bereichs A in Figur 23 zeigt Figur 24. Demnach umfasst das Gestänge 80 an seinem oberen Ende, welches im hohlen Bereich der Schwimmerstange 79 untergebracht ist, ein Arretierungselement 84, das hier beispielsweise kugelförmig ausgebildet und im Durchmesser größer als ein maximaler Durchmesser einer Durchgangsöffnung 85 für das Gestänge 80 in dem Schwimmerteller 82 ist. Stark schematisiert ist außerdem eine Gewindeverbindung 85 zwischen der Schwimmerstange 79 und dem Schwimmerteller 82 dargestellt.

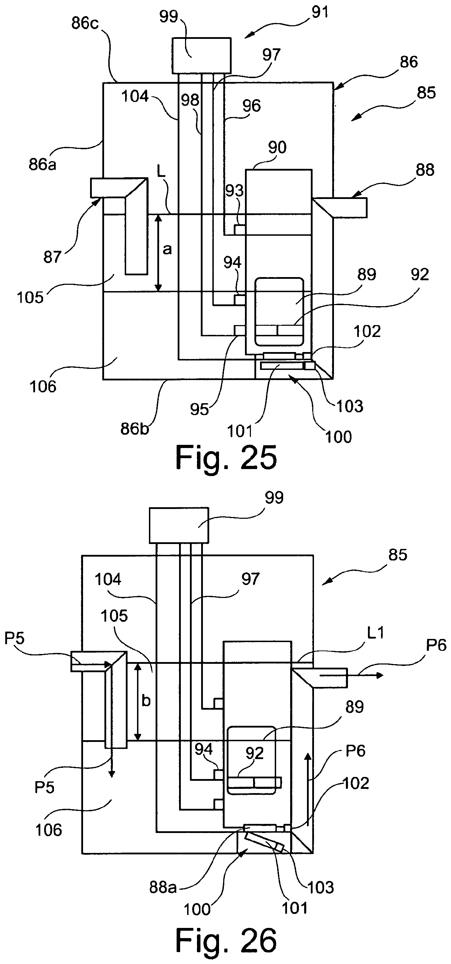

Figur 25 und 26 zeigen stark schematisiert einen Schnitt durch einen Leichtflüssigkeitsabscheiders 85 in zwei unterschiedlichen Betriebszuständen. Der Leichtflüssigkeitsabscheider 85 weist einen z.B. zylindrischen Behälter 86 mit einer Seitenwand 86a, einem Boden 86b und mit einem Deckel 86c auf, sowie einen Zulauf 87, einen Ablauf 88, einen Schwimmerkörper 89 mit Schwimmerführung 90 und eine Erfassungseinrichtung zur Positionserfassung des Schwimmerkörpers 89 im Behälter 86. Der Zulauf 87 ist als horizontal in den Behälter 86 ragendes und nach unten abgewinkeltes Rohr ausgestaltet. Der gegenüber dem Zulauf 87 positionierte Ablauf 88 ist als ein zweifach rechtwinklig abgewinkeltes Ablaufrohr ausgebildet, mit einem horizontalen Rohrabschnitt am Boden 86b mit einer Ablauföffnung 88a, einem Steigrohrabschnitt und einem horizontal abgewinkelten Auslassrohrabschnitt, der durch die Seitenwand 86a nach außen z.B. in einen Abwassersammel- bzw. Hauptkanal (nicht dargestellt) mündet.

Mit der Erfassungseinrichtung können im gezeigten Beispiel drei unterschiedliche vertikale Positionen des Schwimmerkörpers 89 im Behälter 86 exakt erfasst werden. Dazu sind an einer Schwimmerkörperführung 90 drei Magnetschalter 93 bis 95, beispielsweise Reed-Schalter in jeweils unterschiedlicher vertikaler Höhe fest angeordnet und jeweils über eine Leitung 96 bis 98 mit einer zentralen bzw. übergeordneten Einheit 99 außerhalb des Behälters 86 verbunden.

Jeder einzelne Magnetschalter 93 bis 95 wird, wenn der Schwimmerkörper 89 bzw. ein darin vorhandener Permanentmagnet 92 die entsprechende vertikale Position erreicht, mit dem Permanentmagnet 92 im Inneren des Schwimmerkörpers 89 so über Magneteffekte zusammenwirken, dass jede der drei dazugehörigen Positionen des Schwimmerkörpers 89 genau erfassbar ist. Dazu erhält die Einheit 99 ein entsprechendes unterscheidbares Signal des jeweiligen Magnetschalters 93 bis 95. Wandert der Schwimmerkörper 89 mit dem Flüssigkeitsniveau N weiter, nach oben oder unten, so dass der Permanentmagnet im Schwimmerkörper 89 sich vom betreffenden Magnetschalter entfernt und mit diesem nicht mehr interagieren kann, kann der entsprechende zuvor geschaltete Magnetschalter wieder aus- bzw. zurückgeschaltet werden. Auf diese Weise ist im Normalbetrieb kein Magnetschalter oder genau ein Magnetschalter geschaltet. Es sind jedoch auch andere Schaltfolgen einrichtbar, zum Beispiel dass ein vom Schwimmerkörper geschalteter Magnetschalter geschalten bleibt, bis ein anderer Magnetschalter durch den Schwimmerkörper geschalten wird.

Grundsätzlich sind unterschiedliche Regeln zur Lieferung von Informationen mit Hilfe des Schwimmerkörpers und der Magnetschalter denkbar. Zum Beispiel kann eine Information dann bereitgestellt werden, wenn ein Magnetschalter geschaltet ist. Es ist aber auch denkbar, dass zusätzlich eine Information auch dann generiert wird, wenn ein zuvor geschalteter Magnetschalter wieder aus- bzw. zurückgeschaltet wird. Beispielsweise kann mit diesem Wissen ggf. unter Verarbeitung anderer Informationen, wie z.B. eine Information über einen Durchfluss- durch bzw. Zulauf in den Behälter, ebenfalls eine nutzbringende Information über eine Betriebssituation im Behälter bereitgestellt werden. Dies würde also dann zu einer Information führen, obwohl gerade keiner der Magnetschalter geschaltet ist.

Von der Einheit 99 aus kann kabellos und/oder über eine Leitung eine Information dauerhaft oder nur bei bestimmten vorgebbaren Situationen im Behälter, abhängig von der Schwimm-Position des Schwimmerkörpers 89, an eine weitere Einheit z.B. eine Überwachungszentrale übermittelt werden. So kann ggf. auch eine Warnung bzw. ein Alarm ausgelöst werden.

Außerdem ist ein Rückstauventil 100 mit einer Rückstauschwimmerklappe 101 vorhanden, beispielsweise ähnlich dem schwenkbaren Rückstauschwimmer 75 gemäß Figur 20. An der Rückstauschwimmerklappe 101 ist ein Permanentmagnet 103 integriert, welcher mit einem nahe oder an der Ablauföffnung 88a fixierten Magnetschalter 102 zusammenwirken kann, der über eine weitere Leitung 104 mit der Einheit 99 verbunden ist. Demnach wird der Magnetschalter 102 geschaltet bzw. aktiviert und ein Signal erzeugt, wenn die Rückstauschwimmerklappe 101 die Ablauföffnung 88a schließt (siehe Figur 25). Erst wenn die Rückstauschwimmerklappe 101 geschlossen ist, findet eine Strömungsberuhigung im Behälter 86 statt, so dass eine von der Durchlaufströmung nicht verfälschte Bestimmung der Position des Schwimmerkörpers 89 in der Flüssigkeit im Behälter 86 möglich ist. Von den Magnetschaltern 93 bis 95 bereitgestellte Informationen werden also erst dann ausgewertet bzw. weiterverarbeitet, wenn die Rückstauschwimmerklappe 101 geschlossen ist.

In Figur 25 ist ein solcher Zustand gezeigt. Neben dem Magnetschalter 102 ist auch der Magnetschalter 95 durch den Permanentmagneten 92 im Schwimmerkörper 89 betätigt und es wird eine entsprechende Information an die zentrale Einheit 99 übermittelt. Ein mit Abwasser gefüllter Behälter 86 ohne zulaufende und ablaufende Flüssigkeit, hat dabei eine kritische Betriebssituation erreicht und dies wird in der Einheit 99 erkannt und weiterverarbeitet. Dabei hat ein abzuscheidender Flüssigkeitsanteil, der durch eine Leichtflüssigkeit 105 gebildet wird, die oberhalb eines wässrigen Flüssigkeitsanteils 106 aufschwimmt, eine maximal tolerierbare Leichtflüssigkeit-Schichtstärke a bzw. eine Leichtflüssigkeitskapazität des Leichtflüssigkeitsabscheiders 85 erreicht. Nun kann ein Abpumpen der Leichtflüssigkeit 105 aus dem Behälter 86 erfolgen.

Figur 26 zeigt eine Betriebssituation, bei welcher ausgehend von Figur 25 Abwasser gemäß Pfeile P5 in den Behälter 86 zufließt bzw. gemäß Pfeilen P6 abfließt und ein Gesamt-Flüssigkeitsniveau L1 etwas gegenüber dem nicht durchflossenen Zustand mit dem Gesamt-Flüssigkeitsniveau L gemäß Figur 25 ansteigt. Dabei öffnet die Rückstauschwimmerklappe 101, wobei die Leichtflüssigkeit-Schichtstärke a gleich bleiben kann. Mit dem geringen Verschieben der Leichtflüssigkeit-Schichtstärke a nach oben, steigt auch der Schwimmerkörper 89 etwas nach oben.

Der erfindungsgemäße Leichtflüssigkeitsabscheider 85 zeigt nicht nur ein Erreichen der maximalen Leichtflüssigkeitskapazität an, sondern besitzt eine erweiterte Funktion, welche einen auf den Behälter 86 über den Ablauf 88 wirkenden Rückstau anzeigt.

Wenn nach dem Verschließen des Ablaufs 88 weiter Flüssigkeit in den Behälter zuläuft, verlässt der Schwimmerkörper 89 die Trennlinie zwischen den Flüssigkeiten 105 und 106 und bleibt unten (siehe Figur 18 und 22).

Im Normalbetrieb gemäß Figur 25 und 26 verändert sich bei gleichbleibender Leichtflüssigkeitsmenge die Position des Schwimmers durch das Einströmen von Abwasser über den Ablauf 88 gegenüber einer austarierten Position bzw. bei nicht durchströmtem Behälter 86. Dies kann der Permanentmagnet 103 und der Magnetsensor bzw. Magnetschalter 102 korrigieren. Dieser Sensor 102 überwacht den Abwasserabfluss im Abscheider 85. In der Regel ist es zwar so eingerichtet, dass an wenigen bestimmten Stellen immer ein Informationsfluss an die Einheit 99 stattfindet, hier z.B. wenn einer der Magnetschalter 93 bis 95 geschaltet ist, um sicherheitsrelevante Situationen ausnahmslos zu erfassen. Es kann aber z.B. eingerichtet werden, dass der Informationsfluss durch nicht dargestellte bzw. optional vorzusehende Magnetschalter, die in vertikaler Richtung zwischen den Magnetschaltern 93 bis 95 liegen können, erst dann eine Information zur Position des Schwimmerkörpers liefern, wenn die Information nicht durch Strömungseinflüsse verfälscht wird. Die optional zwischenliegenden Magnetschalter führen daher erst dann zu einer Information, wenn der Magnetschalters 102 geschaltet ist, also ein Beruhigungszustand im Behälter 86 herrscht.

Beim Durchlauf von Abwasser gemäß Figur 26 kann der Magnetschalter 102 abgeschaltet sein, womit andere Stromkreise blockiert werden können, die von den zwischenliegenden Magnetschaltern für die Information an die Einheit 99 benötigt werden. So kann die Positionsbestimmung des Schwimmerkörpers 89 für Positionen, die weniger sicherheitsrelevant sind als Positionen gemäß der Magnetschalter 93 bis 95, ausgesetzt werden. Diese Funktion ermöglicht eine korrekte Überwachung der Leichtflüssigkeitsschicht.

Vorteilhaft ist insbesondere eine Anordnung mit hintereinender in vertikaler Richtung bzw. einer Vielzahl von benachbarten aneinandergereiten Magnetschaltern z.B. entlang der Schwimmerführung. Jeder einzelne ist eindeutig schaltbar in einer dazugehörigen individuellen vertikalen Position des Schwimmerkörpers bzw. des Permanentmagneten im Schwimmerkörper. Dies ermöglicht eine lückenlose bzw. zeitlich nicht unterbrochene Positionsbestimmung des schwimmenden Schwimmerkörpers.

### Bezugszeichenliste:

- 1: Abscheider
- 2: Warngerät
- 3: Gebäude
- 4: Behälter
- 4a: Boden
- 4b: Seitenwand
- 4c: Seitenwand
- 4d: Deckel
- 5: Einlaufrohr
- 6: Einlaufstutzen
- 7: Auslaufstutzen
- 8: Ablassöffnung
- 9: Auslassleitung
- 9a: Bodenleitung
- 9b: Wandleitung
- 10: Führung
- 10a: Abschnitt
- 11: Schwimmer
- 12: Flüssigkeit
- 12a: Flüssigkeitspegel
- 13a: Permanentmagnet
- 13b: Permanentmagnet
- 13c: Permanentmagnet
- 13d: Permanentmagnet
- 13e: Permanentmagnet
- 13f: Permanentmagnet
- 14: Reed-Schalter
- 15: Reed-Schalter
- 16: Reed-Schalter
- 17: Sendeeinheit
- 18: Funkübertragung
- 52: Einheit
- 19: Kabel
- 20: Flüssigkeit
- 20a: Flüssigkeitspegel
- 21a: Anzeigefeld
- 21b: Anzeigefeld
- 21c: Anzeigefeld
- 23: Permanentmagnet
- 24: Reed-Schalter
- 25: Reed-Schalter
- 26: Reed-Schalter
- 27: Leitung
- 28: Leitung
- 29: Leitung
- 30: Auswerteeinheit
- 31: Stromversorgungseinheit
- 32: Anzeigefeld
- 33: Anzeigefeld
- 34: Anzeigefeld
- 35: Fühler- und Senderteil
- 36: Reed-Schalter
- 37: Reed-Schalter
- 38: Reedschalter
- 39: Bauteil
- 40: Bauteil
- 41: Bauteil
- 42: Stromversorgungseinheit
- 43: Solarzelle
- 44: Radioteil
- 45: Senderantenne
- 46: Empfängerteil
- 47: Warnsignalelement
- 48: Warnsignalelement
- 49: Warnsignalelement
- 50: Stromversorgungsleitung
- 51: Stromversorgungsleitung
- 52: Einheit
- 53: Empfängerantenne
- 54: Druckmessanordnung
- 55: Differenzdruckumwandler
- 56: Zuleitung
- 57: Zuleitung
- 58: Auswertegerät
- 59: Anzeigeeinheit
- 60: Messniveau
- 61: Messniveau
- 62: Ablauf
- 63: Ablaufsiphon
- 64: Behälterinneres
- 65: Ablauföffnung
- 66: Ablaufrohr
- 67: Rohrhülse
- 68: Schwimmerkörperführung
- 68a: Deckel
- 69: Schwimmerkörper
- 70: Schwimmerkopf
- 71: Schwimmerstange
- 72: Schwimmerteller
- 73: Rückstauventil
- 74: Rückstauschwimmer
- 74a: Schwimmerhauptkörper
- 74b: Verschlussteller
- 75: Rückstauschwimmer
- 76: Schwenkachse
- 77: Schwimmerkörper
- 78: Rückstauventil
- 79: Schwimmerstange
- 80: Gestänge
- 81: Rückstauteller
- 82: Schwimmerteller
- 83: Stütze
- 84: Arretierungselement
- 85: Gewindeverbindung
- 86: Behälter
- 86a: Seitenwand
- 86b: Boden
- 86c: Deckel
- 87: Zulauf
- 88: Ablauf
- 88a: Ablauföffnung
- 89: Schwimmerkörper
- 90: Schwimmerführung
- 91: Erfassungseinrichtung
- 92: Permanentmagnet
- 93 - 95: Magnetschalter
- 96 - 98: Leitung
- 99: Einheit
- 100: Rückstauventil
- 101: Rückstauschwimmerklappe
- 102: Magnetschalter
- 103: Permanentmagnet
- 104: Leitung
- 105: Flüssigkeitsanteil
- 106: Flüssigkeitsanteil

## Patentansprüche

1. Leichtflüssigkeitsabscheider (1; 85) zur Aufnahme einer Flüssigkeit, die mehrere Flüssigkeitsanteile (12, 20, 105, 106) mit jeweils unterschiedlicher Dichte umfassen kann, mit einem Behälter (4, 86) mit einem Zulauf (5, 87) und einem verschließbaren Ablauf (7, 9, 88) für die Flüssigkeit sowie einem in der Flüssigkeit schwimmfähigen Schwimmerkörper (11, 69, 77, 89), dessen Position in dem Behälter (4, 86) von der Art und/oder der Menge der Flüssigkeit in dem Behälter (4, 86) abhängt, wobei der Schwimmerkörper (11, 69, 77, 89) derart ausgebildet ist, oben in einem ersten Flüssigkeitsanteil (12, 106) mit einer ersten Flüssigkeitsanteil-Dichte zu schwimmen, wobei ein weiterer Flüssigkeitsanteil (20, 105) der Flüssigkeit mit einer geringeren Flüssigkeitsanteil-Dichte als die erste Flüssigkeitsanteil-Dichte auf dem ersten Flüssigkeitsanteil (12, 106) aufschwimmen kann, und wobei der Schwimmerkörper (11, 69, 77, 89) für einen selbsttätigen Verschluss des Ablaufs (7, 9, 88) ausgebildet ist, wobei ein Verschließen des Ablaufs (7, 9, 88) von innen bei Erreichen einer maximalen Aufnahmekapazität des Leichtflüssigkeitsabscheiders (1; 85) für den Flüssigkeitsanteil (20, 105) mit der geringeren Flüssigkeitsanteil-Dichte erfolgt, **dadurch gekennzeichnet, dass** eine Erfassungseinrichtung vorhanden ist, welche eine Position des Schwimmerkörpers (11, 89) im Behälter (4, 86) erfasst und eine Information bereitstellt, zumindest wenn der Schwimmerkörper (11, 89) die Position erreicht, wobei die Erfassungseinrichtung Magnetmittel (13a-13f) umfasst, die ein Magnetfeld ausbilden, mit dem die vorgebbare Position des Schwimmerkörpers (11, 89) an mehreren vorgebbaren unterschiedlichen Stellen im Behälter erfassbar ist.

2. Leichtflüssigkeitsabscheider nach Anspruch 1, **dadurch gekennzeichnet, dass** eine Rückstausicherung mit einem selbsttätig wirkenden Verschluss (74, 75, 81, 101) des Ablaufs (88) bei einer auf den Behälter (86) ablaufseitig wirkenden Rückstausituation vorhanden ist.

3. Leichtflüssigkeitsabscheider nach einem der vorhergehenden Ansprüche, **dadurch gekennzeichnet, dass** Übertragungsmittel (17, 19, 27, 28, 29, 96, 97, 98) vorhanden sind, um die bereitgestellten Informationen aus dem Innern des Behälters (4, 86) nach außen zu übertragen.

4. Leichtflüssigkeitsabscheider nach einem der vorhergehenden Ansprüche, **dadurch gekennzeichnet, dass** die Übertragungsmittel eine Verbindungsleitung (19, 27, 28, 29, 96, 97, 98) zur Übertragung der bereitgestellten Informationen aufweisen.

5. Leichtflüssigkeitsabscheider nach Anspruch 2, **dadurch gekennzeichnet, dass** die Rückstausicherung einen selbsttätigen Schwimmerverschluss (74, 75, 101) auf einer Ablaufseite des Ablaufs (62, 88) umfasst.

6. Leichtflüssigkeitsabscheider nach Anspruch 5, **dadurch gekennzeichnet, dass** der selbsttätige Schwimmerverschluss (101) über Magnetmittel (102, 103) verfügt, die ein Magnetfeld ausbilden, um einen geschlossenen Zustand des Ablaufs (88) durch den selbsttätigen Schwimmerverschluss (101) zu erfassen.

7. Leichtflüssigkeitsabscheider nach Anspruch 2, **dadurch gekennzeichnet, dass** die Rückstausicherung ein Verschlusselement (81) auf der Ablaufseite des Ablaufs umfasst, wobei das Verschlusselement (81) mit einem Schwimmer (77) auf einer Behälterseite des Ablaufs gekoppelt ist.

8. Leichtflüssigkeitsabscheider (1; 85) zur Aufnahme einer Flüssigkeit, die mehrere Flüssigkeitsanteile (12, 20, 105, 106) mit jeweils unterschiedlicher Dichte umfassen kann, mit einem Behälter (4, 86) mit einem Zulauf (5, 87) und einem verschließbaren Ablauf (7, 9, 88) für die Flüssigkeit sowie einem in der Flüssigkeit schwimmfähigen Schwimmerkörper (11, 69, 77, 89), dessen Position in dem Behälter (4, 86) von der Art und/oder der Menge der Flüssigkeit in dem Behälter (4, 86) abhängt, wobei der Schwimmerkörper (11, 69, 77, 89) derart ausgebildet ist, oben in einem ersten Flüssigkeitsanteil (12, 106) mit einer ersten Flüssigkeitsanteil-Dichte zu schwimmen, wobei ein weiterer Flüssigkeitsanteil (20, 105) der Flüssigkeit mit einer geringeren Flüssigkeitsanteil-Dichte als die erste Flüssigkeitsanteil-Dichte auf dem ersten Flüssigkeitsanteil (12, 106) aufschwimmen kann, und wobei der Schwimmerkörper (11, 69, 77, 89) für einen selbsttätigen Verschluss des Ablaufs (7, 9, 88) ausgebildet ist, wobei ein Verschließen des Ablaufs (7, 9, 88) von innen bei Erreichen einer maximalen Aufnahmekapazität des Leichtflüssigkeitsabscheiders (1; 85) für den Flüssigkeitsanteil (20, 105) mit der geringeren Flüssigkeitsanteil-Dichte erfolgt, **dadurch gekennzeichnet, dass** eine Erfassungseinrichtung vorhanden ist, welche eine Position des Schwimmerkörpers (11, 89) im Behälter (4, 86) erfasst und eine Information bereitstellt, zumindest wenn der Schwimmerkörper (11, 89) die Position erreicht, wobei die Erfassungseinrichtung Magnetmittel mit einem am Schwimmerkörper (11, 89) vorhandenen Permanentmagneten (23, 92) und mehrere zum Schwimmerkörper (11, 89) separate positionsfeste schaltbare Magnetelemente (24, 25, 26, 93, 94, 95) umfasst, wobei der Permanentmagnet (23, 92) abhängig von der Position des Schwimmerkörpers (11, 89) jeweils genau eines der schaltbaren Magnetelemente (24, 25, 26, 93, 94, 95) schalten kann.

## Claims

1. Low density fluid separator (1; 85) for receiving a fluid which can include a plurality of fluid portions (12, 20, 105, 106) each with a different density, with a container (4, 86) having an inflow (5, 87) and a closable outflow (7, 9, 88) for the fluid and a float (11, 69, 77, 89) that is capable of floating in the fluid, the position of which in the container (4, 86) depends on the type and/or amount of fluid in the container (4, 86), wherein the float (11, 69, 77, 89) is designed to float at the top in a first fluid portion (12, 106) with a first fluid portion density, wherein a further fluid portion (20, 105) of the fluid with a lower fluid portion density than the first fluid portion density can float on the first fluid portion (12, 106), and wherein the float (11, 69, 77, 89) is designed for an automatic closure of the outflow (7, 9, 88), wherein the outflow (7, 9, 88) is closed from the inside on reaching a maximum absorption capacity of the low density fluid separator (1; 85) for the fluid portion (20, 105) with the lower fluid portion density, **characterised in that** a detecting device is provided, which detects a position of the float (11, 89) in the container (4, 86) and provides information, at least when the float (11, 89) reaches the position, wherein the detection device comprises magnet means (13a-13f) which form a magnetic field by which the predefinable positon of the float (11, 89) can be detected at a plurality of predefinable different points in the container.

2. Low density fluid separator according to claim 1, **characterised in that** a backflow protection is provided with an automatically operating closure (74, 75, 81, 101) of the outflow (88) in a backflow situation acting on the outflow side on the container (86).

3. Low density fluid separator according to any of the preceding claims, **characterised in that** transfer means (17, 19, 27, 28, 29, 96, 97, 98) are provided for transferring the information provided outwards from the inside of the container (4, 86).

4. Low density fluid separator according to any of the preceding claims, **characterised in that** the transfer means have a connecting line (19, 27, 28, 29, 96, 97, 98) for transmitting the provided information.

5. Low density fluid separator according to claim 2, **characterised in that** the backflow protection comprises an automatic float closure (74, 75, 101) on an outflow side of the outflow (62, 88).

6. Low density fluid separator according to claim 5, **characterised in that** the automatic float closure (101) has magnet means (102, 103) which form a magnetic field, in order to detect a closed state of the outflow (88) by means of the automatic float closure (101).

7. Low density fluid separator according to claim 2, **characterised in that** the backflow protection comprises a closure element (81) on the outflow side of the outflow, wherein the closure element (81) is coupled to a float (77) on a container side of the outflow.

8. Low density fluid separator (1; 85) for receiving a fluid, which can comprise a plurality of fluid portions (12, 20, 105, 106) each with a different density, with a container (4, 86) having an inflow (5, 87) and a closable outflow (7, 9, 88) for the fluid and a float (11, 69, 77, 89) that is capable of floating in the fluid, the position of which in the container (4, 86) depends on the type and/or amount of fluid in the container (4, 86), wherein the float (11, 69, 77, 89) is configured to float at the top in a first fluid portion (12, 106) with a first fluid portion density, wherein a further fluid portion (20, 105) of the fluid with a lower fluid portion density than the first fluid portion density can float on the first fluid portion (12, 106), and wherein the float (11, 69, 77, 89) is designed for an automatic closure of the outflow (7, 9, 88), wherein the outflow (7, 9, 88) is closed from the inside on reaching a maximum receiving capacity of the low density fluid separator (1; 85) for the fluid portion (20, 105) with the lower fluid portion density, **characterised in that** a detecting device is provided which detects a position of the float (11, 89) in the container (4, 86) and provides information, at least when the float (11, 89) reaches the position, wherein the detecting device comprises magnet means with a permanent magnet (23, 92) provided on the float (11, 89) and a plurality of fixed switchable magnet elements (24, 25, 26, 93, 94, 95) separate from the float (11, 89), wherein the permanent magnet (23, 92) depending on the position of the float (11, 89) can switch exactly one of the switchable magnet elements (24, 25, 26, 93, 94, 95).

## Revendications

1. Séparateur de liquides légers (1 ; 85) pour recevoir un liquide pouvant comprendre plusieurs fractions de liquide (12, 20, 105, 106) ayant chacune une densité différente, comprenant un récipient (4, 86) avec une entrée (5, 87) et une sortie (7, 9, 88) pour le liquide, la sortie pouvant être fermée, ainsi qu'un corps de flotteur (11, 69, 77, 89) pouvant flotter dans le liquide et dont la position dans le récipient (4, 86) dépend du type et/ou de la quantité du liquide dans le récipient (4, 86), le corps de flotteur (11, 69, 77, 89) étant conçu pour nager en haut d'une première fraction de liquide (12, 106) ayant une densité de première fraction de liquide, une autre fraction de liquide (20, 105) du liquide ayant une densité de fraction de liquide inférieure à la densité de première fraction de liquide pouvant surnager sur la première fraction de liquide (12, 106), et le corps de flotteur (11, 69, 77, 89) étant conçu pour fermer automatiquement la sortie (7, 9, 88), la fermeture de la sortie (7, 9, 88) étant réalisée depuis l'intérieur lorsqu'une capacité de réception maximale du séparateur de liquides légers (1 ; 85) est atteinte pour la fraction de liquide (20, 105) ayant la plus faible densité de fraction de liquide, **caractérisé en ce qu'**il est prévu un dispositif de détection qui détecte une position du corps de flotteur (11, 89) dans le récipient (4, 86) et fournit une information au moins lorsque le corps de flotteur (11, 89) atteint ladite position, le dispositif de détection comprenant des moyens magnétiques (13a-13f) qui forment un champ magnétique avec lequel la position prédéterminable du corps de flotteur (11, 89) peut être détectée en plusieurs positions différentes prédéterminables dans le récipient.

2. Séparateur de liquides légers selon la revendication 1, **caractérisé en ce qu'**il est prévu un dispositif anti-reflux avec une fermeture automatique (74, 75, 81, 101) de la sortie (88) dans le cas d'une situation de reflux agissant sur le récipient (86) du côté sortie.

3. Séparateur de liquides légers selon l'une des revendications précédentes, **caractérisé en ce que** des moyens de transmission (17, 19, 27, 28, 29, 96, 97, 98) sont présents pour transmettre de l'intérieur du récipient (4, 86) vers l'extérieur les informations fournies.

4. Séparateur de liquides légers selon l'une des revendications précédentes, **caractérisé en ce que** les moyens de transmission sont munis d'une ligne de connexion (19, 27, 28, 29, 96, 97, 98) pour transmettre les informations fournies.

5. Séparateur de liquides légers selon la revendication 2, **caractérisé en ce que** le dispositif anti-reflux comprend une fermeture à flotteur automatique (74, 75, 101) sur un côté sortie de la sortie (62, 88).

6. Séparateur de liquides légers selon la revendication 5, **caractérisé en ce que** la fermeture à flotteur automatique (101) comporte des moyens magnétiques (102, 103) formant un champ magnétique pour détecter un état fermé de la sortie (88) par la fermeture à flotteur automatique (101).

7. Séparateur de liquides légers selon la revendication 2, **caractérisé en ce que** le dispositif anti-reflux comprend un élément de fermeture (81) sur le côté sortie de la sortie, l'élément de fermeture (81) étant couplé à un flotteur (77) sur un côté récipient de la sortie.

8. Séparateur de liquides légers (1 ; 85) pour recevoir un liquide pouvant comprendre plusieurs fractions de liquide (12, 20, 105, 106) ayant chacune une densité différente, comprenant un récipient (4, 86) avec une entrée (5, 87) et une sortie (7, 9, 88) pour le liquide, la sortie pouvant être fermée, ainsi qu'un corps de flotteur (11, 69, 77, 89) pouvant flotter dans le liquide et dont la position dans le récipient (4, 86) dépend du type et/ou de la quantité de liquide dans le récipient (4, 86), le corps de flotteur (11, 69, 77, 89) étant conçu pour nager en haut d'une première fraction de liquide (12, 106) ayant une densité de première fraction de liquide, une autre fraction de liquide (20, 105) du liquide ayant une densité de fraction de liquide inférieure à la densité de première fraction de liquide pouvant surnager sur la première fraction de liquide (12, 106), et le corps de flotteur (11, 69, 77, 89) étant conçu pour fermer automatiquement la sortie (7, 9, 88), la fermeture de la sortie (7, 9, 88) étant réalisée depuis l'intérieur lorsqu'une capacité de réception maximale du séparateur de liquides légers (1 ; 85) est atteinte pour la fraction de liquide (20, 105) ayant la plus faible densité de fraction de liquide, **caractérisé en ce qu'**il est prévu un dispositif de détection qui détecte une position du corps de flotteur (11, 89) dans le récipient (4, 86) et fournit une information au moins lorsque le corps de flotteur (11, 89) atteint ladite position, le dispositif de détection comprenant des moyens magnétiques avec un aimant permanent (23, 92) présent sur le corps de flotteur (11, 89) et plusieurs éléments magnétiques commutables (24, 25, 26, 93, 94, 95) séparés du corps de flotteur (11, 89) et positionnés fixement, l'aimant permanent (23, 92) pouvant commuter exactement un des éléments magnétiques commutables (24, 25, 26, 93, 94, 95) en fonction de la position du corps de flotteur (11, 89).
